# EUROPÄISCHE PATENTSCHRIFT

(11) **EP 2 117 885 B1**
(45) Veröffentlichungstag und Bekanntmachung des Hinweises auf die Patenterteilung: **21.07.2010**
(21) Anmeldenummer: 08708905.8
(22) Anmeldetag: 12.02.2008
(51) Int. Cl.: B60R 22/28

(54) **SICHERHEITSGURTANORDNUNG FÜR EIN KRAFTFAHRZEUG**
SAFETY BELT SYSTEM FOR A MOTOR VEHICLE
ENSEMBLE CEINTURE DE SÉCURITÉ POUR UN VÉHICULE AUTOMOBILE

(30) Priorität: 12.02.2007 DE 102007007702; 28.09.2007 DE 102007047549
(43) Veröffentlichungstag der Anmeldung: 18.11.2009
(73) Patentinhaber: Takata-Petri AG, 63743 Aschaffenburg (DE)
(72) Erfinder: WENDT, Mario, 14473 Potsdam (DE); VIDOLOV, Kliment, 14055 Berlin (DE)
(74) Vertreter: Müller, Wolfram Hubertus
(86) Internationale Anmeldenummer: PCT/EP2008/051669
(87) Internationale Veröffentlichungsnummer: WO 2008/098925

(56) Entgegenhaltungen:
- WO-A-2006/092206
- DE-A1- 4 232 160
- DE-C1- 3 233 797
- DE-U1- 20 303 549
- GB-A- 2 356 604
- US-A- 5 058 244
- US-A- 5 411 292
- US-A- 5 667 246

## Beschreibung

Die Erfindung betrifft eine Sicherheitsgurtanordnung für ein Kraftfahrzeug gemäß dem Oberbegriff des Anspruchs 1.

Aus der DE 4 232 160 ist eine Sicherheitsgurtanordnung bekannt, umfassend einen entlang einer Gurtverlaufsrichtung verlaufenden Sicherheitsgurt, ein im Bereich eines Gurtschlosses angeordnetes Schlossumlenkelement zum Umlenken des Sicherheitsgurtes entlang der Gurtverlaufsrichtung, wobei das Schlossumlenkelement den Sicherheitsgurt in ein diagonal über den Oberkörper einer Person verlaufendes Schultersegment (Schultergurt) und ein mit dem Schultersegment verbundenes weiteres Gurtsegment unterteilt, das insbesondere in Form eines Beckensegmentes (Beckengurt) über das Becken jener bestimmungsgemäß mittels des Sicherheitsgurtes angeschnallten Person verläuft, sowie einen bewegbaren Bereich des Schlossumlenkelementes, der im Falle einer gefährlichen Situation (Crashfall) aus einer Anfangsstellung, in der der Sicherheitsgurt am bewegbaren Bereich entlang gleiten kann, in eine Endstellung bewegbar ist, in der der Sicherheitsgurt am Schlossumlenkelement festgelegt ist.

Unter einem Festlegen des Sicherheitsgurtes am Schlossumlenkelement wird vorliegend ein Fixieren des Sicherheitsgurtes am Schlossumlenkelement verstanden derart, dass der Sicherheitsgurt nicht mehr bzw. nur unter Aufbringung vorbestimmbarer, deutlich höherer Kräfte am Schlossumlenkelement entlang gleiten kann.

Unter der Gurtverlaufsrichtung wird dabei diejenige Richtung verstanden, der der Sicherheitsgurt entlang seines gesamten Verlaufes folgt, d. h., die Gurtverlaufsrichtung ändert ihre Orientierung im Raum, wenn der Sicherheitsgurt beispielsweise durch das Schlossumlenkelement umgelenkt wird.

Nachteilig an der eingangs erwähnten Sicherheitsgurtanordnung ist, dass die im Rückhaltefall über den Sicherheitsgurt in einen Fahrzeuginsassen eingeleitete Kraft in Gurtverlaufsrichtung zunimmt. So steigt bei einem Schultersegment (Schultergurt), das in der Gurtverlaufsrichtung von einem Schulterumlenkelement diagonal über den Oberkörper des Insassen zum Schlossumlenkelement verläuft, die entlang der Gurtverlaufsrichtung wirkende Kraft, und damit die in den Oberkörper des Fahrzeugsinsassen eingeleitete Kraft, ausgehend von der Schulter des Insassen in Gurtverlaufsrichtung zum Thorax des Insassen hin an, und zwar infolge der Reibung zwischen dem Insassen und dem Schultergurt. Hierdurch liegen gerade im verletzungsträchtigen Thoraxbereich des Fahrzeuginsassen höhere Kräfte an, als am vergleichsweise weniger verletzungsträchtigen Schulterbereich des Fahrzeuginsassen.

Aus der gattungsgemässen WO 2006/092206 A1 ist eine Sicherheitsgurtanordnung bekannt, bei der des Weiteren der bewegbare Bereich dazu ausgebildet ist, durch eine am Schultersegment angreifende Kraft, die das Schultersegment entlang der Gurtverlaufsrichtung spannt, aus seiner Anfangsstellung in seine Endstellung verlagert zu werden, wobei der bewegbare Bereich das Schultersegment beim Bewegen in seine Endstellung derart entlastet, dass die entlang der Gurtverlaufsrichtung des Schultersegmentes wirkende Kraft und damit die resultierende, an dem Schultersegment angreifende Kraft begrenzt wird. Dabei treibt der bewegbare Bereich in Form eines ersten Schiebers zum Fixieren des Sicherheitsgurtes am Schlossumlenkelement ein separates Klemmelement in Form eines zweiten Schiebers an, welches den Sicherheitsgurt am Schlossumlenkelement festklemmt bevor der erste Schieber seine Endstellung erreicht hat.

Der Erfindung liegt das Problem zugrunde, eine Sicherheitsgurtanordnung der vorgenannten Art weiter zu verbessern.

Das erfindungsgemäße Problem wird durch eine Sicherheitsgurtanordnung, insbesondere für ein Kraftfahrzeug, mit den Merkmalen des Anspruchs 1 gelöst. Danach ist der bewegbare Bereich dazu eingerichtet und vorgesehen, den Sicherheitsgurt am Schlossumlenkelement festzulegen, und zwar insbesondere, indem der bewegbare Bereich den Sicherheitsgurt kontaktiert. Hierbei kann der Sicherheitsgurt z.B. durch einen Reibschluss am Schlossumlenkelement festgelegt werden.

Vorzugsweise ist der bewegbare Bereich dazu eingerichtet und vorgesehen, in seiner Endstellung oder bereits vor Erreichen seiner Endstellung einen Abschnitt des

Sicherheitsgurtes über eine Kontaktfläche des bewegbaren Bereiches zu kontaktieren und mit jener Kontaktfläche den besagten Abschnitt des Sicherheitsgurtes gegen das Schlossumlenkelement zu drücken, um den Sicherheitsgurt durch Festklemmen am Schlossumlenkelement festzulegen.

Durch die vorliegende Kraftbegrenzung am Schlossumlenkelement werden die Kräfte, die im Rückhaltefall über den Schultergurt in den Thoraxbereich eines Fahrzeuginsassen eingeleitet werden, gegenüber denjenigen Kräften, die über den Sicherheitsgurt in den Schulterbereich des Insassen eingeleitete werden, reduziert, so dass im Gegensatz zu einem Sicherheitsgurtsystem mit einem herkömmlichen Schlossumlenkelement, die in den Insassen eingeleiteten Kräfte im Bereich der Schulter des Insassen größer sind als im Thoraxbereich des Fahrzeuginsassen. Die Kraftbegrenzung am Schlossumlenkelement sorgt also für eine Umverteilung des üblichen Kraftverlaufes an einem kraftbegrenzten Gurtsegment (z.B. Schultersegment).

Hinzu kommt, dass an der Schulter eines Fahrzeuginsassen angreifende Kräfte im Hinblick auf die Rückhaltung des Fahrzeuginsassen wirkungsvoller sind, als vergleichbare, am Thoraxbereich des Insassen angreifende Kräfte, da der effektive Hebelarm bei an der Schulter angreifenden Rückhaltekräften durch den gesamten Oberkörper des Fahrzeuginsassen gebildet wird und somit länger ist als der effektive Hebelarm der am Thoraxbereich des Fahrzeuginsassen angreifenden Rückhaltekräfte.

Bevorzugt ist der bewegbare Bereich einstückig ausgebildet, so dass er keine relativ zueinander beweglichen - insbesondere zwangsgesteuerte - Teile umfasst. Die Festlegung des Sicherheitsgurtes erfolgt somit auf einfache, zuverlässige Weise und involviert kein komplexes Zusammenspiel einer Mehrzahl zueinander beweglicher Teile.

Weiterhin ist vorzugsweise vorgesehen, dass der bewegbare Bereich zum Fixieren des Sicherheitsgurtes am Schlossumlenkelement eine Kraft auf den Sicherheitsgurt entlang einer Richtung ausübt, die in die Endstellung des bewegbaren Bereichs weist, so dass eine Kraftumlenkung verzichtbar ist,

Vorzugsweise weist der bewegbare Bereich des Schlossumlenkelementes einen Anlagebereich auf, an dem der Sicherheitsgurt in der Anfangsstellung des bewegbaren Bereiches unter Vorspannung anliegt. Diese Vorspannung kann beispielsweise durch einen Gurtaufroller bereitgestellt werden, der den Sicherheitsgurt entlang der Gurtverlaufsrichtung strafft oder durch den Insassen selbst, der infolge einer Verzögerung des Kraftfahrzeuges entlang der Fahrzeuglängsachse gegen den angelegten Sicherheitsgurt gedrückt wird und diesen damit entlang seiner Gurtverlaufsrichtung spannt.

Der Anlagebereich des bewegbaren Bereiches dient einerseits zum Umlenken des Sicherheitsgurtes, indem dieser schlaufenförmig um den Anlagebereich herumgelegt wird und andererseits zum Einleiten von Kraft in den bewegbaren Bereich, und zwar über den am Anlagebereich anliegenden Sicherheitsgurt, so dass der bewegbare Bereich im Rückhaltefall aus seiner Anfangstellung in seine Endstellung bewegt werden kann.

Zum Begrenzen einer in das Schultersegment eingeleiteten Kraft ist der bewegbare Bereich dazu eingerichtet und vorgesehen, den Anlagebereich bei der Bewegung in die Endstellung entgegen der Gurtverlaufsrichtung des Schultersegmentes derart zu verlagern, dass das am Anlagebereich anliegende Schultersegment entlastet wird. Die Gurtverlaufsrichtung des Schultersegmentes ist dabei diejenige Richtung, in der das Schultersegment zum Schlossumlenkelement, und zwar zum Anlagebereich des Schlossumlenkelementes, hin verläuft.

Gleichzeitig verhindert der sich in seine Endstellung verlagernde bewegbare Bereich, dass der Sicherheitsgurt am Schlossumlenkelement entlang gleiten kann, indem er an diesem festgesetzt wird, d.h., der Durchlauf des Sicherheitsgurtes durch das Schlossumlenkelement wird vermittels des bewegbaren Bereiches vollkommen gesperrt bzw. ist nur auf einem erheblich höheren Kraftniveau möglich. Somit wirkt die Kraftbegrenzung nur für das Schultersegment, das entgegen seiner Gurtverlaufsrichtung entlastet wird und nicht für das weitere, vom Anlagebereich in der Gurtverlaufsrichtung abgehende Gurtsegment.

Die Sperrung des Durchlaufes durch den bewegbaren Bereich erfolgt, bevor der bewegbare Bereich seine Endstellung erreicht. Ggf. kann jedoch auch erst in der Endstellung des bewegbaren Bereiches ein Festlegen des Sicherheitsgurtes am Schlossumlenkelement bewirkt werden.

Zum Festlegen des Sicherheitsgurtes (Sperren des Gurtdurchlaufs) weist das Schlossumlenkelement bevorzugt einen Arretierbereich auf, an dem der Sicherheitsgurt beim Bewegen des bewegbaren Bereiches in dessen Endstellung festgelegt wird, z.B. indem der Sicherheitsgurt gegen den Arretierbereich gedrückt wird. Bei diesem Arretierbereich handelt es sich vorzugsweise um einen Randbereich einer Durchgangsöffnung des Schlossumlenkelementes, die zum Führen und Umlenken des Sicherheitsgurtes eingerichtet und vorgesehen ist. In einer Variante der Erfindung ist vorgesehen, dass der Sicherheitsgurt lediglich durch eine einzige Durchgangsöffnung des Schlossumlenkelementes geführt ist.

Erfindungsgemäß ist der bewegbare Bereich selbst dazu eingerichtet und vorgesehen, den Sicherheitsgurt beim Bewegen in die Endstellung am Arretierbereich festzulegen, beispielsweise indem der bewegbare Bereich den Sicherheitsgurt gegen den Arretierbereich drückt. D.h., der Sicherheitsgurt wird zwischen dem Arretierbereich und dem bewegbaren Bereich eingeklemmt.

Es ist aber bei allen Ausführungsformen auch denkbar, ein aus einer ersten in eine zweite Position bewegbares separates Klemmelement vorzusehen, das dazu ausgebildet ist, den Sicherheitsgurt in seiner zweiten Position am Arretierbereich festzulegen. Hierbei kann das Klemmelement mittels des bewegbaren Bereiches angetrieben werden oder durch eine zusätzliche Bewegungserzeugungsvorrichtung (z.B. ein sich entspannendes Federelement).

Bevorzugt ist der bewegbare Bereich bzw. ggf. ein separat zum bewegbaren Bereich vorgesehenes Klemmelement dazu ausgebildet, den Sicherheitsgurt derart am Arretierbereich festzulegen, dass der bewegbare Bereich bzw. das separate Klemmelement eine definierte Relativbewegung des Sicherheitsgurtes entgegen der Gurtverlaufsrichtung zulässt (Durchrutschen des Sicherheitsgurtes um einen bestimmten Betrag), wenn eine entgegen der Gurtverlaufsrichtung am Sicherheitsgurt wirkende Kraft ein vorbestimmbares Kraftniveau erreicht. Vorzugsweise ist das Klemmelement einstückig an den bewegbaren Bereich angeformt, stellt also einen integralen Bestandteil des bewegbaren Bereichs dar.

Insbesondere ist das separat zum bewegbaren Bereich ausgebildete Klemmelement oder eine Mehrzahl solcher Elemente bzw. der bewegbare Bereich dazu ausgebildet reversibel bewegt zu werden, d.h., es ist eine reversible Klemmung des Sicherheitsgurtes möglich (der Sicherheitsgurt kann wieder gelöst werden).

Es ist auch möglich, dass der bewegbare Bereich bei der Verlagerung in die Endstellung das weitere Gurtsegment (Beckensegment) spannt oder auch geringfügig entlastet. Bei dem zuletzt genannten Fall ist allerdings entscheidend, dass bei einem in der Endstellung befindlichen bewegbaren Bereich das Schultersegment in wesentlich größerem Maße entlastet (entspannt) ist, als das weitere Gurtsegment des Sicherheitsgurtes.

Bevorzugt verläuft das Schultersegment (Schultergurt) - ausgehend von einem Gurtaufroller zum Speichern eines Teiles des Sicherheitsgurtes - in der Gurtverlaufsrichtung im Wesentlichen senkrecht zur Fahrzeuglängsachse nach oben und wird etwa auf Schulterhöhe eines mittels des Sicherheitsgurtes bestimmungsgemäß angeschnallten Insassen durch ein zumeist fahrzeugfest angeordnetes Schulterumlenkelement in Richtung auf den Oberkörper des Insassen umgelenkt und verläuft sodann diagonal über den Oberkörper des Insassen zu dem Schlossumlenkelement. Von dort erstreckt sich das weitere Gurtsegment bevorzugt in Form eines Beckensegmentes (Beckengurt) des Sicherheitsgurtes entlang des Beckens des Insassen zu einer sitzfest oder fahrzeugfest angeordneten Sitzgurtverankerung. Das Schlossumlenkelement ist bei einer derartigen Sicherheitsgurtanordnung als Teil einer Gurtschlosseinrichtung ausgebildet und weist eine Gurtschlosszunge auf, die dazu ausgebildet ist mit einer sitzfesten oder fahrzeugfesten Gurtschlossschnalle lösbar verrastet zu werden.

In einer Ausführungsform der Erfindung ist der bewegbare Bereich des Schlossumlenkelementes als ein Hebel ausgebildet, der zwischen der Anfangsstellung und der Endstellung hin und her schwenkbar ist. Hierzu ist der Hebel um eine Drehachse schwenkbar an einem die Durchgangsöffnung des Schlossumlenkelementes berandenden Körper des Schlossumlenkelementes festgelegt, wobei die Drehachse bevorzugt von einem ersten Rand der Durchgangsöffnung zu einem zweiten Rand der Durchgangsöffnung verläuft, der dem ersten Rand quer zur Gurtverlaufsrichtung gegenüberliegt. Die Durchgangsöffnung wird vom Sicherheitsgurt entlang der Gurtverlaufsrichtung durchlaufen und dient zum Führen des Sicherheitsgurtes.

Bevorzugt wird die Drehachse durch ein Torsionselement, vorzugsweise in Form einer Torsionsstange, gebildet, das an den beiden gegenüberliegenden Rändern der Durchgangsöffnung befestigt ist und dem Verschwenken des Hebels aus der Anfangsstellung in die Endstellung eine vordefinierbares Drehmoment entgegensetzt. Vorzugsweise weist der Hebel einen ersten Arm auf, der entlang einer quer zur Drehachse orientierten Erstreckungsrichtung erstreckt ist. Der Anlagebereich, über den der Sicherheitsgurt am bewegbaren Bereich des Schlossumlenkelementes anliegt, wird durch eine Stirnseite des ersten Armes gebildet, die der Drehachse des Hebels abgewandt ist. Beim Einleiten einer vordefinierbaren Kraft in das Schultersegment, die das Schultersegment entlang der Gurtverlaufsrichtung spannt, wird der erste Arm mit samt seiner Stirnseite, an dem das Schultersegment in der Anfangsstellung des Hebels unter Vorspannung anliegt, entgegen der Gurtverlaufsrichtung, d.h., in Richtung des angegurteten Fahrzeuginsassen verschwenkt, so dass das Schultersegment entlastet wird, was zu einer Begrenzung der in das Schultersegment eingeleiteten Kraft führt.

Gleichzeitig mit dem Verschwenken des ersten Armes in Richtung auf den mittels des Sicherheitsgurtes angegurteten Fahrzeuginsassen, wird der zweite Arm des Hebels derart verschwenkt, dass der Sicherheitsgurt in der Endstellung des Hebels zwischen dem zweiten Arm und einem entlang der Drehachse verlaufenden Randbereich der Durchgangsöffnung eingeklemmt wird, so dass der Durchlauf des Sicherheitsgurtes durch die Durchgangsöffnung entgegen der Gurtverlaufsrichtung gesperrt ist.

Im Ergebnis ermöglicht dies eine Entlastung des Schultersegmentes (Schultergurtes) entlang der Gurtverlaufsrichtung, die vorzugsweise einer Verlängerung des Schultersegmentes entlang der Gurtverlaufsrichtung um etwa 70mm entspricht.

Bevorzugt bildet der Randbereich der Durchgangsöffnung in der Endstellung des Hebels ein Widerlager für den zweiten Arm des Hebels, so dass der Winkel, um den der Hebel um die Drehachse verschwenkbar ist, begrenzt ist.

In einer alternativen Ausführungsform der Erfindung weist das Schlossumlenkelement zum Begrenzen der Schwenkbewegung des Hebels aus der Anfangsstellung in die Endstellung ein Sperrelement auf, das den Körper mitsamt dem Hebel im Querschnitt umgreift. Das Sperrelement ist vorzugsweise flexibel ausgebildet und wird bei der Bewegung des Hebels in seine Endstellung deformiert. Dabei übt es auf den Hebel ein der Schwenkbewegung des Hebels entgegen gesetztes Drehmoment aus und ermöglicht so eine Entlastung des am Anlagebereich des Hebels anliegenden Schultergurtes auf einem vorbestimmbaren Kraftniveau.

In der Endstellung des Hebels ist der Sicherheitsgurt zwischen dem zweiten Arm des Hebels und dem Sperrelement eingeklemmt, so dass der Gurtdurchlauf durch die Durchgangsöffnung des Schlossumlenkelementes gesperrt ist. Um das Festsetzen des Sicherheitsgurtes an der Durchgangsöffnung zu verstärken kann der zweite Arm in einem Bereich, mit dem der zweite Arm in der Endstellung des Hebels den Sicherheitsgurt gegen das Sperrelement drückt, eine Oberflächenstruktur mit einem hohen Reibungskoeffizienten aufweisen. Alternativ oder zusätzlich kann eine solche Oberflächenstruktur zur Verstärkung der Reibung zwischen dem Sicherheitsgurt und dem Sperrelement auch am Sperrelement bereitgestellt werden.

Vorzugsweise ist zusätzlich zu dem Sperrelement eine Rastverbindung zwischen dem Hebel und dem Körper des Schlossumlenkelementes vorgesehen, mittels der der Hebel in seiner Anfangsstellung lösbar am Körper des Schlossumlenkelementes festgelegt ist, so dass er nicht aus seiner Anfangsstellung herausbewegt werden kann. Die Rastverbindung ist dabei derart beschaffen, dass sie den Hebel erst bei einem vordefinierbaren, am Hebel angreifenden Mindestdrehmoment freigibt.

In einer Variante der Erfindung ist der Hebel zusätzlich dazu ausgebildet, durch Einleiten einer vorbestimmbaren Kraft in das Schultersegment, die das Schultersegment entlang der Gurtverlaufsrichtung spannt, entlang einer quer zur Drehachse verlaufenden Verschiebungsrichtung aus einer ersten Position in eine zweite Position linear verschoben zu werden, so dass der Hebel das Schultersegment in der zweiten Position zusätzlich entlastet (entspannt). D.h., die Schwenkbewegung des Hebels aus der Anfangsstellung in die Endstellung kann mit einer zusätzlichen, linearen Bewegung des Hebels aus der ersten Position in die zweite Position überlagert werden. Hierzu ist die Drehachse des Hebels vorzugsweise an den beiden aneinander gegenüberliegenden Rändern der Durchgangsöffnung des Schlossumlenkelementes verschieblich gelagert.

In einer weiteren Ausführungsform der Erfindung ist vorgesehen, dass die Bewegung des bewegbaren Bereiches aus der Anfangsstellung in die Endstellung in einer Deformierung des bewegbaren Bereiches besteht. Der bewegbare Bereich weist dabei in der Anfangsstellung eine Form auf, die durch Einleiten einer vorbestimmbaren Kraft in das Schultersegment, die das Schultersegment entlang der Gurtverlaufsrichtung spannt, reproduzierbar in eine der Endstellung entsprechende Form verformbar ist. In der Endstellung ist der bewegbare Bereich dann derart deformiert, dass der Durchlauf des Sicherheitsgurtes durch die Durchgangsöffnung gesperrt ist. Bei dieser Deformation handelt es sich um eine plastische Deformation (inelastische Verformung), d.h., nach einem solchen Verformen behält der bewegbare Bereich seine verformte Gestalt (Raumform) bei.

Damit der bewegbare Bereich, der vorzugsweise aus einem Metall gefertigt ist, durch Einleiten einer Kraft in das Schultersegment derart deformierbar ist, dass der Gurtdurchlauf durch die Durchgangsöffnung gesperrt ist, ist der bewegbare Bereich bevorzugt abschnittsweise in Form einer Schlaufe ausgebildet, an der die Durchgangsöffnung des Schlossumlenkelementes ausgebildet ist, die entlang der Gurtverlaufsrichtung des Sicherheitsgurtes einer weiteren an der Schlaufe ausgebildeten Durchgangsöffnung gegenüber liegt.

Die Schlaufe weist weiterhin einen freien Endabschnitt auf, der von der einen Durchgangsöffnung abgehend entlang der Gurtverlaufsrichtung in Richtung auf die weitere Durchgangsöffnung verläuft, wobei der Anlagebereich des schlaufenförmigen, bewegbaren Bereiches durch einen Randabschnitt der einen Durchgangsöffnung gebildet ist, um den der Sicherheitsgurt zum Umlenken des Sicherheitsgurtes herumgelegt ist. Der bewegbare Bereich ist nun derart ausgebildet, dass der Anlagebereich beim Einleiten einer vorbestimmbaren Kraft in das Schultersegment, die das Schultersegment entlang der Gurtverlaufsrichtung spannt, entgegen der Gurtverlaufsrichtung verlagert wird, wobei der freie Endabschnitt der Schlaufe bzw. des bewegbaren Bereiches in die weitere Durchgangsöffnung stößt und dort den Sicherheitsgurt festsetzt. Hierdurch wird der Gurtdurchlauf durch die beiden Durchgangsöffnungen gesperrt.

In einer weiteren Ausführungsform der Erfindung ist der Anlagebereich des bewegbaren Bereiches durch eine schmale Stirnseite eines freien Endabschnittes des bewegbaren Bereiches gebildet, wobei die Schlaufe des bewegbaren Bereiches bevorzugt dazu eingerichtet und vorgesehen, sich beim Verlagern des Anlagebereiches, d.h. beim Verformen des bewegbaren Bereiches aus der Anfangstellung in die Endstellung, zuzuziehen, so dass der durch die beiden Durchgangsöffnungen verlaufende, die Schlaufe des bewegbaren Bereiches durchquerende Sicherheitsgurt in der Schlaufe festgelegt wird.

In einer weiteren bevorzugten Ausführungsform der Erfindung ist der bewegbare Bereich als ein Umlenkkörper zum Umlenken des Sicherheitsgurtes ausgebildet, der über zumindest ein Deformationselement mit einem bezüglich einer Gurtschlosszunge des Schlossumlenkelementes ruhenden Teil des Schlossumlenkelementes verbunden ist, wobei es sich bei jenem Teil insbesondere um ein Gehäuse zur Aufnahme des bewegbaren Bereichs handelt.

Vorzugsweise ist das mindestens eine Deformationselement dazu ausgebildet, sich unter Einwirkung einer vorbestimmbaren, an dem Schultersegment wirkenden Kraft, die das Schultersegment entlang der Gurtverlaufsrichtung spannt, reproduzierbar zu Verformen, wobei der bewegbare Bereich entlang einer Bewegungsrichtung linear aus der Anfangstellung in die Endstellung bewegt wird.

In einer Variante der Erfindung ist das Deformationselement als eine Lasche, insbesondere eine Blechlasche ausgebildet, wobei die Verformung der Lasche in einer Rollbiegung besteht, oder anders gesagt, die Blechlasche weist eine Krümmung auf, die beim Verformen der Lasche ihre Position an der Lasche verändert.

In einer alternativen Variante ist das Deformationselement als eine Schlaufe ausgebildet, wobei der bewegbare Bereich bevorzugt derart mit der Schlaufe gekoppelt ist, dass der bewegbare Bereich beim Bewegen in seine Endstellung an der Schlaufe entlang gleitet, wobei die Schlaufe zumindest abschnittsweise derart deformiert wird, dass der Bewegung des bewegbaren Bereiches in die Endstellung ein vorbestimmbarer Widerstand entgegen gesetzt wird. Bevorzugt bildet die Schlaufe einen Anschlag für den bewegbaren Bereich derart, dass die Bewegung des bewegbaren Bereiches in der Endstellung begrenzt wird.

In einem weiteren Ausführungsbeispiel ist das Deformationselement als ein längs erstreckter Stift ausgebildet, der mit einem quer zur Bewegungsrichtung erstreckten ersten Abschnitt und einen damit einstückig verbunden, entlang der Bewegungsrichtung des bewegbaren Bereichs erstreckten zweiten Abschnitt aufweist, über den der Stift mit dem Teil (Gehäuse) des Schlossumlenkelementes verbunden ist, wobei der Stift mit dem ersten Abschnitt vorzugsweise in eine sackförmige, quer zur Bewegungsrichtung erstreckte Ausnehmung des bewegbaren Bereichs formschlüssig eingeführt ist und bei der Bewegung des bewegbaren Bereichs aus der Anfangstellung in die Endstellung unter Verformung aus jener Ausnehmung herausgezogen wird, um der Bewegung des bewegbaren Bereichs einen vorbestimmbaren Widerstand entgegen zu setzen. Jener Widerstand kann dabei mittels der Stiftstärke bzw. der Materialzusammensetzung des oder der Stifte eingestellt werden.

In einem weiteren Ausführungsbeispiel ist das mindestens eine Deformationselement als ein erstes Federelement, d.h., als ein elastisches, rückstellfähiges Element ausgebildet, das der Bewegung des bewegbaren Bereiches in dessen Endstellung eine rückstellende Kraft entgegen setzt. D.h., die Bewegung des bewegbaren Bereichs erfolgt entgegen der Federkraft. Durch die Verwendung eines rückstellfähigen Federelementes kann das Schlossumlenkelement die an dem Schultersegment angreifende Kraft mit Vorteil reversibel begrenzen und ist somit mehrmals verwendbar.

Zum Dämpfen der (üblicherweise translatorischen) Bewegung des bewegbaren Bereichs ist ein Dämpfungselement vorgesehen, über das der bewegbare Bereich bevorzugt mit einem bezüglich einer Gurtschlosszunge des Schlossumlenkelementes ruhenden Teil des Schlossumlenkelementes verbunden ist, bei dem es sich insbesondere um ein den bewegbaren Bereich umgreifendes Gehäuse handelt.

Ggf. können mehrere der vorstehend dargelegten Deformationselemente zum Kontrollieren der Entlastungsbewegung des bewegbaren Bereichs vorgesehen sein.

Des Weiteren ist in einer Weiterbildung der Erfindung vorgesehen, dass das Deformationselement die Eigenschaften sowohl eines Federelementes als auch eines Dämpferelementes in sich vereint. Oder anders gesagt, das Deformationselement weist ein integrales Dämpfungselement auf (letzteres kann einstückig mit dem Deformationselement bzw. Federelement ausgebildet sein).

Diese Eigenschaft, sowohl die Rückstellfunktion als auch die Dämpfungsfunktion in einem Element zu vereinen, ist einerseits über die Form des Deformationselementes an sich und andererseits über dessen Materialzusammensetzung realisier- und kontrollierbar.

Um den Gurtdurchlauf insbesondere vor der Entlastungsbewegung des bewegbaren Bereiches zu sperren, ist vorgesehen, dass der bewegbare Bereich selbst dazu ausgebildet ist, den Sicherheitsgurt am Arretierbereich zu fixieren bzw. festzulegen. Alternativ hierzu ist es auch denkbar ein separat zum bewegbaren Bereich ausgebildetes Klemmelement vorzusehen, das linear verschieblich entlang einer quer zur Bewegungsrichtung des bewegbaren Bereichs orientierten Richtung an einem Teil des Schlossumlenkelementes gelagert ist, um den Sicherheitsgurt gegen den Arretierbereich zu drücken. Es ist hierbei auch denkbar, das Klemmelement unabhängig vom bewegbaren Bereich oder mittels des bewegbaren Bereichs anzutreiben.

Alternativ zur vorgenannten (linear verschieblichen) Lagerung des (separaten) Klemmelementes ist dieses bevorzugt schwenkbar an einem Teil des Schlossumlenkelementes, insbesondere am besagten Gehäuse des Schlossumlenkelementes, gelagert, so dass es aus seiner ersten Position in seine zweite Position verschwenkt werden kann, in der das Klemmelement den Sicherheitsgurt zum Sperren des Gurtdurchlaufs gegen den Arretierbereich drückt. Bevorzugt ist hierbei vorgesehen, dass das Klemmelement den Sicherheitsgurt in der zweiten Position des Klemmelementes derart am Arretierbereich festlegt, dass der Sicherheitsgurt ein weiteres Mal umgelenkt wird, und zwar vorzugsweise um 180°.

In einer anderen Ausführungsvariante ist das Deformationselement zusätzlich linear entlang der Bewegungsrichtung des bewegbaren Bereiches aus einer ersten Position in eine zweite Position verschiebbar, wenn eine vorbestimmbare Kraft, die das Schultersegment entlang der Gurtverlaufsrichtung spannt, an dem Schultersegment angreift und über den Anlagebereich entgegen der Gurtverlaufsrichtung des Schultersegmentes auf den bewegbaren Bereich einwirkt.

Bevorzugt wird der Sicherheitsgurt beim Bewegen des Deformationselementes in die zweite Position am Arretierbereich festgelegt. Beispielsweise indem das Deformationselement selbst den Sicherheitsgurt gegen den Arretierbereich drückt oder ein separates Klemmelement auslöst bzw. dieses in seine zweite Position bringt.

Besonders bevorzugt ist die vorgenannte Lagerung des Deformationselementes dergestalt, dass dessen Verformung nach dem Verschieben in die zweite Position erfolgt.

In einem weiteren Ausführungsbeispiel der Erfindung ist der Anlagebereich zwischen einer ersten und einer zweiten Stellung hin und her bewegbar mit dem bewegbaren Bereich gekoppelt, so dass der Anlagebereich unter Einwirkung einer an dem Schultersegment angreifenden Kraft, die das Schultersegment entlang der Gurtverlaufsrichtung spannt, aus der ersten Stellung in Richtung des bewegbaren Bereiches in die zweite Stellung bewegt wird, und zwar bevor der bewegbare Bereich durch jene Kraft in seine Endstellung bewegt wird.

Dabei kann der Anlagebereich zum Bewegen des (separaten) Klemmelementes aus der ersten Position in die zweite Position derart mit dem Klemmelement gekoppelt sein, dass eine Bewegung des Anlagebereiches aus der ersten Stellung in die zweite Stellung eine Bewegung des Klemmelementes aus der ersten in die zweite Position bewirkt bzw. auslöst. Bevorzugt ist der Anlagebereich hierzu über zumindest ein zweites Federelement mit dem bewegbaren Bereich gekoppelt.

Vorzugsweise ist in den vorstehenden Ausführungsformen jedoch das Klemmelement einstückig mit dem bewegbaren Bereich ausgebildet, so dass das Fixieren bzw. Festlegen des Sicherheitsgurtes am Schlossumlenkelement (Arretierbereich) durch den bewegbaren Bereich selbst erfolgt.

Vorzugsweise handelt es sich bei dem Arretierbereich um ein Teil des den bewegbaren Bereich zumindest teilweise umgebenden Gehäuses, und zwar insbesondere um einen Abschnitt einer dem bewegbaren Bereich zugewandten Innenseite des Gehäuses.

Bevorzugt ist der bewegbare Bereich mit einem Körper des Schlossumlenkelementes verbunden, insbesondere einstückig, wobei es sich bei dem Körper natürlich auch um das vorgenannte Gehäuse zur Aufnahme des bewegbaren Bereichs handeln kann.

Vorzugsweise ist am Körper des Schlossumlenkelementes des Weiteren eine Gurtschlosszunge ausgebildet, die in einer Längserstreckungsrichtung vom Körper des Schlossumlenkelementes absteht und die dazu eingerichtet und vorgesehen ist, entlang der Längserstreckungsrichtung in eine Gurtschlossschnalle eingeführt zu werden, wobei die Gurtschlosszunge lösbar mit der Gurtschlossschnalle verrastet.

In einer Variante der Erfindung ist die Gurtschlosszunge über zwei linienförmige, entlang der Längserstreckungsrichtung erstreckte Schwächungsbereiche mit dem Körper des Schlossumlenkelementes verbunden, insbesondere einstückig, wobei die Schwächungsbereiche (beispielsweise Bereiche geringer Materialstärke oder perforierte Bereiche) dazu ausgebildet sind, entlang der Längserstreckungsrichtung einzureißen, wenn eine vorbestimmbare Kraft entgegen der Längserstreckungsrichtung an der Gurtschlosszunge angreift. Jene Kraft wird dabei von der Gurtschlossschnalle aufgenommen. Eine solche, die Schwächungsbereiche einreißende Kraft kann beispielsweise über den Sicherheitsgurt in das Schlossumlenkelement eingeleitet werden.

Vorzugsweise wird die Gurtschlosszunge durch das Einreißen jener Schwächungsbereiche entlang der Längserstreckungsrichtung effektiv verlängert, wodurch das Schultersegment zusätzlich entlastet wird. Je nach Auslegung der Schwächungsbereiche kann diese zusätzliche Entlastung des Schultersegmentes grundsätzlich aktiviert werden, d.h., zusammen mit der Bewegung des bewegbaren Bereiches aus der Anfangsstellung in die Endstellung oder als zusätzliche Kraftbegrenzungsmaßnahme. In diesem Fall liegt die erforderliche Mindestkraft zum Einreißen der Schwächungsbereiche über derjenigen Kraft, die am Anlagebereich des bewegbaren Bereiches angreifend den bewegbaren Bereich aus der Anfangsstellung in die Endstellung zu bewegen vermag.

In einer weiteren Variante der Erfindung ist ein weiterer auf das Schultersegment wirkender Kraftbegrenzer vorgesehen. Dieser ist bevorzugt an einem Gurtaufroller vorgesehen, aus dem der Sicherheitsgurt in Gurtverlaufsrichtung ausziehbar ist. Der Gurtaufroller stellt eine Vorspannung des Sicherheitsgurtes entlang der Gurtverlaufsrichtung bereit. Der am Gurtaufroller vorgesehene Kraftbegrenzer erzeugt seine die Gurtkraft begrenzende Wirkung und damit die Entlastung des Schultergurtes entlang der Gurtverlaufsrichtung vorzugsweise durch ein Herausziehen (Freigeben) des Sicherheitsgurtes auf einem vorbestimmbaren Kraftniveau. Die Entlastung des Schultergurtes entspricht dabei einer Längenzunahme des Schultersegmentes des Sicherheitsgurtes (Schultergurt) entlang der Gurtverlaufsrichtung von vorzugsweise bis zu 300 mm.

Vom Gurtaufroller verläuft das Schultersegment entlang der Gurtverlaufsrichtung zum Schlossumlenkelement. Bevorzugt wird das Schultersegment des Sicherheitsgurtes hierbei entlang der Gurtverlaufsrichtung durch ein weiteres Gurtführungselement, bei dem es sich vorzugsweise um ein Schulterumlenkelement handelt, umgelenkt.

Bei einer Sicherheitsgurtanordnung, die lediglich die Merkmale des Oberbegriffs des Anspruchs 1 aufweist, handelt es sich bereits um einen eigenständig einsetzbaren vorteilhaften Gegenstand, der mit Vorteil durch die Unteransprüche 2 bis 72 bzw. wie vorliegend beschrieben weitergebildet werden kann. Hierbei ist nicht unbedingt erforderlich, dass der bewegbare Bereich dazu ausgebildet ist, den Sicherheitsgurt bereits vor dem Erreichen der Endstellung am Schlossumlenkelement zu fixieren.

Weitere Einzelheiten und Vorteile der Erfindung werden bei der nachfolgenden Beschreibung von Ausführungsbeispielen anhand der Figuren deutlich werden.

Es zeigen:
- Fig. 1: eine perspektivische, schematische Ansicht eines Fahrzeugsitzes mit einem Dreipunkt-Sicherheitsgurt, der ausgehend von einem Retraktor (Gurtaufroller) entlang einer Gurtverlaufsrichtung über ein Schulterumlenkelement und ein Schlossumlenkelement zu einer am Sitz vorgesehenen Gurtverankerung verläuft;
- Fig.1A: eine Seitenansicht eines mittels eines Schultergurtes angegurteten Insassen eines Kraftfahrzeuges;
- Fig.2: ein Diagramm, in dem die am Sicherheitsgurt entlang der Gurtverlaufsrichtung angreifende Kraft im Falle einer Verzögerung des Kraftfahrzeuges dargestellt ist;
- Fig. 3: eine schematische Darstellung eines Verlaufes eines Sicherheitsgurtes eines Dreipunkt-Sicherheitsgurtsystems, mit einem Schlossumlenk- element, das einen in einer Anfangsstellung befindlichen verschwenkbaren Hebel aufweist, der zum Begrenzen einer an einem Schultergurt angreifenden Kraft dient;
- Fig. 4: den in der Figur 3 gezeigten Gurtverlauf, mit einem bewegbaren Bereich in Form eines Hebels, der aus der in der Figur 3 gezeigten Anfangsstellung in eine Endstellung verschwenkt ist, in der der Hebel den Schultergurt entspannt, um die in den Schultergurt eingeleitete Kraft zu begrenzen;
- Fig. 5: eine schematische Draufsicht auf ein Schlossumlenkelement, mit einem bewegbaren Element in Form eines Hebels, der um eine Drehachse schwenkbar in einer Durchgangsöffnung eines Körpers des Schlossumlenkelementes gelagert ist;
- Fig. 6: eine schematische, teilweise geschnittene Ansicht des in der Figur 5 gezeigten Schlossumlenkelementes entlang der Linie VI-VI der Figur 5, mit einem in seiner Anfangsstellung befindlichen Hebel;
- Fig. 7: eine schematische, teilweise geschnittene Ansicht entlang der Linie VI-VI der Figur 5, wobei der Hebel in seine Endstellung verschwenkt ist;
- Fig. 8: eine schematische, teilweise geschnittene Ansicht entlang der Linie VI-VI der Figur 5, mit einem in der Endstellung befindlichen Hebel, der zusätzlich linear entlang des Körpers des Schlossumlenkelementes verfahren ist;
- Fig. 9: eine schematische Draufsicht einer Abwandlung des in der Figur 5 gezeigten Schlossumlenkelementes;
- Fig. 10: eine schematische, teilweise geschnittene Ansicht des in der Figur 9 gezeigten Schlossumlenkelementes entlang der Linie X-X der Figur 9;
- Fig. 11: eine schematische, teilweise geschnittene Ansicht des in der Figur 9 gezeigten Schlossumlenkelementes entlang der Linie X-X der Figur 10, mit einem Hebel, der aus seiner Anfangsstellung herausgeschwenkt ist, wobei der Hebel den Sicherheitsgurt gegen ein Sperrelement drückt, so dass der Gurtdurchlauf durch das Schlossumlenkelement gesperrt ist;
- Fig. 12: eine teilweise geschnittene Ansicht des in der Figur 9 gezeigten Schlossumlenkelementes entlang der Linie X-X der Figur 9, mit einem in seine Endstellung verschwenkten Hebel;
- Fig. 13: eine weitere Draufsicht auf eine Abwandlung des in den Figuren 5 bis 12 gezeigten Schlossumlenkelementes, mit einem bewegbaren Bereich, der aus einer Anfangsstellung in eine Endstellung deformierbar ist;
- Fig. 14: eine schematische Schnittansicht des in der Figur 13 gezeigten Umlenkelementes entlang der Linie XIV-XIV der Figur 13, wobei der bewegbare Bereich in seiner Anfangsstellung angeordnet ist;
- Fig. 15: eine schematische Schnittansicht des in der Figur 13 gezeigten Schlossumlenkelementes entlang der Linie XIV-XIV der Figur 13, dessen bewegbarer Bereich derart deformiert ist, dass der Gurtdurchlauf durch die beiden Durchgangsöffnungen des bewegbaren Bereiches gesperrt ist;
- Fig. 16: eine schematische Schnittansicht des in der Figur 13 gezeigten Schlossumlenkelementes entlang der Linie XIV-XIV der Figur 13, mit einem in die Endstellung deformierten bewegbaren Bereich;
- Fig. 17: eine weitere Abwandlung des in den Figuren 5 bis 16 gezeigten Schlossumlenkelementes;
- Fig. 18: eine schematische Schnittansicht des in der Figur 17 gezeigten Schlossumlenkelementes entlang der Linie XVIII-XVIII der Figur 17, wobei der bewegbare Bereich in seiner Anfangsstellung angeordnet ist;
- Fig. 19: eine schematische Schnittansicht des in der Figur 17 gezeigten Schlossumlenkelementes entlang der Linie XVIII-XVIII der Figur 17, dessen bewegbarer Bereich derart deformiert ist, dass der Gurtdurchlauf durch zwei Durchgangsöffnungen des bewegbaren Bereiches gesperrt ist;
- Fig. 20: eine schematische Schnittansicht des in der Figur 17 gezeigten Schlossumlenkelementes entlang der Linie XVIII-XVIII der Figur 17, mit einem in die Endstellung deformierten bewegbaren Bereich;
- Fig. 21: eine Draufsicht auf eine Vorderseite eines Schlossumlenkelementes, mit einer Gurtschlosszunge, die teilweise über einreißbare Schwächungsbereiche mit einem Körper des Schlossumlenkelementes verbunden ist;
- Fig. 22: eine schematische, teilweise geschnittene Ansicht des in der Figur 21 gezeigten Schlossumlenkelementes entlang der Linie XXII-XXII der Figur 21;
- Fig. 23: eine Draufsicht auf eine der Vorderseite abgewandte Rückseite des in der Figur 21 gezeigten Schlossumlenkelementes;
- Fig. 24: eine schematische, geschnittene Ansicht eines weiteren Ausführungs- beispieles eines erfindungsgemäßen Schlossumlenkelementes, mit einem bewegbaren Bereich, der über ein gedämpftes Federelement mit einem Gehäuse des Schlossumlenkelementes verbunden ist;
- Fig. 25: eine schematische, geschnittene Ansicht einer Abwandlung des in der Figur 24 gezeigten Schlossumlenkelementes, bei dem der bewegbare Bereich mittels einer deformierbaren Blechlasche am Gehäuse des Schlossumlenkelementes festgelegt ist;
- Fig. 26: eine schematische, geschnittene Ansicht einer Abwandlung des in der Figur 25 gezeigten Schlossumlenkelementes, mit zwei einander gegenüberliegenden Blechlaschen zum Koppeln des bewegbaren Bereiches an das Gehäuse des Schlossumlenkelementes;
- Fig. 27: eine schematische, teilweise geschnittene Ansicht einer Abwandlung des in der Figur 25 gezeigten Schlossumlenkelementes, mit zwei an den Stirnseiten angeordneten Blechlaschen;
- Fig. 28: eine schematische, geschnittene Ansicht einer weiteren Ausführungsform des erfindungsgemäßen Schlossumlenkelementes, bei der der bewegbare Bereich mittels deformierbarer Stifte mit dem Gehäuse gekoppelt ist;
- Fig. 29: eine schematische, teilweise geschnittene Ansicht einer Abwandlung des in der Figur 28 gezeigten Schlossumlenkelementes, bei dem der bewegbare Bereich über eine deformierbare Blechschlaufe mit dem Gehäuse verbunden ist;
- Fig. 30: eine schematische, geschnittene Ansicht des in der Figur 24 gezeigten Schlossumlenkelementes, mit einem verschieblich gelagerten Klemm- element zum Arretieren des Gurtdurchlaufs;
- Fig. 31: eine schematische, geschnittene Ansicht einer Abwandlung des in der Figur 30 gezeigten Schlossumlenkelementes, mit einem schwenkbar am Gehäuse des Schlossumlenkelementes gelagerten Klemmelement zum Sperren des Gurtdurchlaufs;
- Fig. 32: eine schematische, geschnittene Ansicht einer Abwandlung des in der Figur 31 gezeigten Schlossumlenkelement, bei dem das schwenkbare Klemmelement zusätzlich dazu ausgebildet ist, den Sicherheitsgurt umzulenken;
- Fig. 33: eine schematische, geschnittene Ansicht einer weiteren Abwandlung des in der Figur 24 gezeigten Schlossumlenkelementes, mit einem Anlagebereich für den Sicherheitsgurt, der zum Sperren des Gurtdurchlaufs elastisch mit dem bewegbaren Bereich verbunden ist; und
- Fig. 34: eine schematische, geschnittene Ansicht einer Abwandlung des in der Figur 25 gezeigten Schlossumlenkelementes, bei dem die Blechlasche zum Sperren des Gurtdurchlaufs zusätzlich linear verschieblich am Gehäuse des Schlossumlenkelementes gelagert ist.

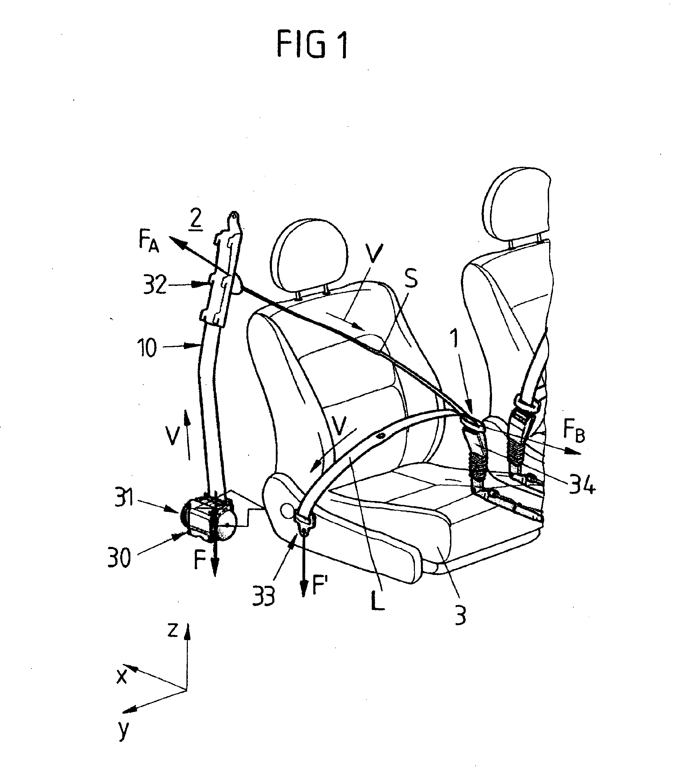

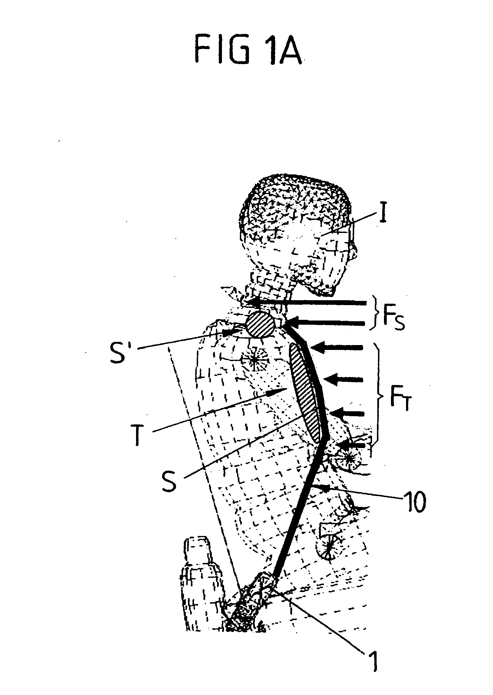

Figur 1 zeigt im Zusammenhang mit Figur 1A eine perspektivische Ansicht eines Fahrzeugsitzes 3 mit einem Dreipunkt-Sicherheitsgurtsystem 2. Das Sicherheitsgurtsystem 2 umfasst einen Sicherheitsgurt 10, der zumindest teilweise in einem fahrzeugfest angeordneten Gurtaufroller 30 aufgerollt oder dort aufbewahrt ist, wobei der Sicherheitsgurt 10 aus dem Gurtaufroller 30 in einer Gurtverlaufsrichtung V ausziehbar ist.

Ist der Sicherheitsgurt 10 an einen den Fahrzeugsitz 3 belegenden Fahrzeuginsassen angelegt, so weist der Sicherheitsgurt 10 den folgenden, bekannten Gurtverlauf auf: Ausgehend vom Gurtaufroller 30 verläuft der Sicherheitsgurt 10 in der Gurtverlaufsrichtung V im Wesentlichen entlang der vertikalen Fahrzeugachse z nach oben zu einem fährzeugfest angeordneten Schulterumlenkbeschlag 32, der entlang der vertikalen Fahrzeugachse z höhenverstellbar ausgebildet sein kann, wird mittels dieses Schulterumlenkbeschlages 32 umgelenkt und verläuft dann entlang der vertikalen Fahrzeugachse z in Gurtverlaufsrichtung V diagonal über den Oberkörper des auf dem Fahrzeugsitz befindlichen Fahrzeuginsassen I nach unten zu einem Schlossumlenkelement 1.

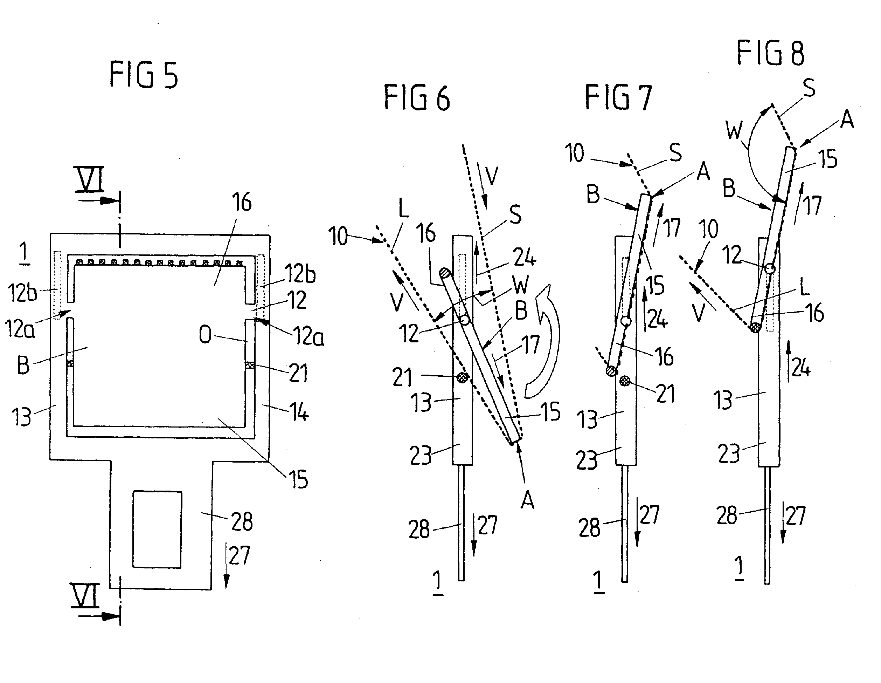

Am Schlossumlenkelement 1 ist eine Gurtschlosszunge 28 ausgebildet (vgl. Figuren 5 bis 23), die im angegurteten Zustand des Fahrzeuginsassen I entlang ihrer Längserstreckungsrichtung 27 in eine am Fahrzeug festgelegte Gurtschlossschnalle 34 eingesteckt ist und dabei lösbar in der Gurtschlossschnalle 34 arretiert ist. Durch das Schlossumlenkelement 1 wird der Sicherheitsgurt 10 umgelenkt und verläuft über einen Beckenbereich des Fahrzeuginsassen I und an diesen anliegend in der Gurtverlaufsrichtung V zu einer am Fahrzeugsitz 3 festgelegte Gurtverankerung 33.

Die Gurtumlenkeinrichtung 1, die entlang der vertikalen Fahrzeugachse z etwa auf Höhe der Hüfte eines den Sitz 3 belegenden Fahrzeuginsassen I angeordnet ist, unterteilt den Sicherheitsgurt 10 entlang der Gurtverlaufsrichtung V in zwei Gurtsegmente, nämlich einen Schultersegment oder Schultergurt S, der ausgehend vom Gurtaufroller 30 diagonal über den Oberkörper des angegurteten Fahrzeuginsassen I zum Schlossumlenkelement 1 verläuft und ein Beckensegment oder Beckengurt L, der vom Schlossumlenkelement 1 ausgehend in der Gurtverlaufsrichtung V zur Sitzgurtverankerung 33 verläuft.

Mittels des Gurtaufrollers 30 ist der Sicherheitsgurt 10 gegen den Oberkörper des Fahrzeuginsassen I vorgespannt, so dass er an diesem anliegt.

Im Falle eines Unfalls, beispielsweise einem Frontalaufprall, wird das Fahrzeug entgegen der Fahrtrichtung, d.h., entlang der Fahrzeuglängsachse x verzögert, wobei der mittels des Sicherheitsgurtes 10 an den Fahrzeugsitz 3 gegurtete Fahrzeuginsasse I infolge seiner Trägheit entlang der Fahrzeuglängsachse x gegen den Sicherheitsgurt 10, und zwar den Schultergurt S und den Beckengurt L gedrückt wird, und zwar mit einer Kraft, die der Trägheit des Fahrzeuginsassen entspricht. Diese Kraft greift am Sicherheitsgurt 10 an und spannt diesen entlang der Gurtverlaufsrichtung V.

Die den Sicherheitsgurt 10 spannenden Kräfte werden im Wesentlichen einerseits am Gurtaufroller 30 und andererseits - bei einem Schlossumlenkelement 1 mit freiem Gurtdurchlauf - an der Gurtverankerung 33 in das Kraftfahrzeug bzw. den Fahrzeugsitz 3 eingeleitet. Die am Gurtaufroller 30 eingeleitete Kraft ist dabei entgegen der Gurtverlaufsrichtung V orientiert, während die an der Gurtverankerung 33 angreifende Gurtkraft F' in Gurtverlaufsrichtung V verläuft.

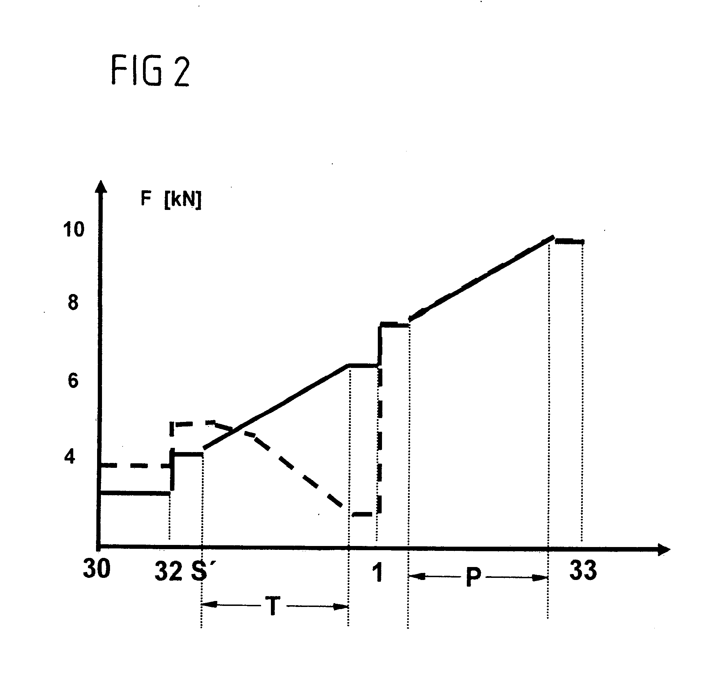

Bei einem herkömmlichen Sicherheitsgurtsystem 2, bei dem eine Gurtkraftbegrenzung lediglich am Gurtaufroller 30 erfolgt, z.B. mittels eines am Gurtaufroller 30 angeordneten Kraftbegrenzers 31, steigt die den Sicherheitsgurt 10 entlang der Gurtverlaufsrichtung V straffende Kraft F aufgrund des Reibschlusses zwischen dem Sicherheitsgurt 10 und dem angegurteten Fahrzeuginsassen I entlang der Gurtverlaufsrichtung V an. Hierdurch ergibt sich der in der Figur 2 anhand der durchgezogenen Linie gezeigte Verlauf der Kraft F (Ordinate) entlang der Gurtverlaufsrichtung V, wobei an der Abszisse des in der Figur 2 dargestellten Diagramms markante Positionen des Gurtverlaufes (Schlossumlenkelement 30, Schulterumlenkelement 32, Schlossumlenkelement 1 und Gurtverankerung 33) gekennzeichnet sind. Durch den Reibschluss zwischen dem Fahrzeuginsassen I und dem Sicherheitsgurt 10 steigt die Kraft F insbesondere im Thoraxbereich T des Fahrzeuginsassen I an, so dass die bei der Rückhaltung in den Oberkörper des Fahrzeuginsassen I eingeleiteten Kräfte im verletzungsträchtigen Thoraxbereich T betragsmäßig größer sind als am vergleichsweise robusten Schulterbereich S' des Fahrzeuginsassen I. Dies ist auch insofern nachteilig, als dass aufgrund der Hebelverhältnisse des menschlichen Körpers eine im Bereich der Schulter S' des Fahrzeuginsassen angreifende Rückhaltekraft Fₛ den wichtigsten Beitrag zur Rückhaltung des Fahrzeuginsassen leistet, da der zugehörige Hebelarm maximal ist. Im Vergleich dazu weist eine am Thoraxbereich des Fahrzeuginsassen angreifende Rückhaltekraft F_{T} einen kleineren Hebelarm auf und muss daher vergleichsweise größer sein, um denselben Beitrag zur Rückhaltung des Fahrzeuginsassen I zu leisten, wie die am Schulterbereich S' angreifende Krafte Fₛ.

Um die am Thoraxbereich T des Fahrzeuginsassen I angreifenden Rückhaltekräfte F_{T} zu verringern, weist das Schlossumlenkelement 1 einen Mechanismus auf, der einerseits den Gurtdurchlauf des Sicherheitsgurtes 10 durch das Schlossumlenkelement 1 im Falle einer gefährlichen Situation, d.h. im Rückhaltefall, sperrt und andererseits die bei einer gefährlichen Fahrzeugsituation den Schultergurt S entlang dessen Gurtverlaufsrichtung V spannende Kraft F_{B} am Schlossumlenkelement 1 begrenzt.

Hierdurch wird der in der Figur 2 anhand der gestrichehten Linie dargestellte Verlauf der Gurtkraft F entlang der Gurtverlaufsrichtung V erzielt, bei dem aufgrund der Gurtkraftbegrenzung am Schlossumlenkelement 1 die den Sicherheitsgurt 10 entlang der Gurtverlaufsrichtung V spannende Kraft F ausgehend vom Schulterumlenkelement 32 entlang der Gurtverlaufsrichtung V abnimmt, so dass die bei einem Unfall in den Oberkörper des Fahrzeuginsassen I entlang der Fahrzeuglängsachse x eingeleiteten Kräfte F_{S}, F_{T} im Schulterbereich S' des Fahrzeuginsassen I größer sind als im Thoraxbereich T. Somit wird mittels der am Schlossumlenkelement 1 vorgenommenen Kraftbegrenzung des Schultersegmentes S die Rückhaltung des Fahrzeuginsassen I bei einem Unfall verbessert und gleichzeitig das Verletzungsrisiko des Fahrzeuginsassen I, insbesondere für den Thoraxbereich T, verringert.

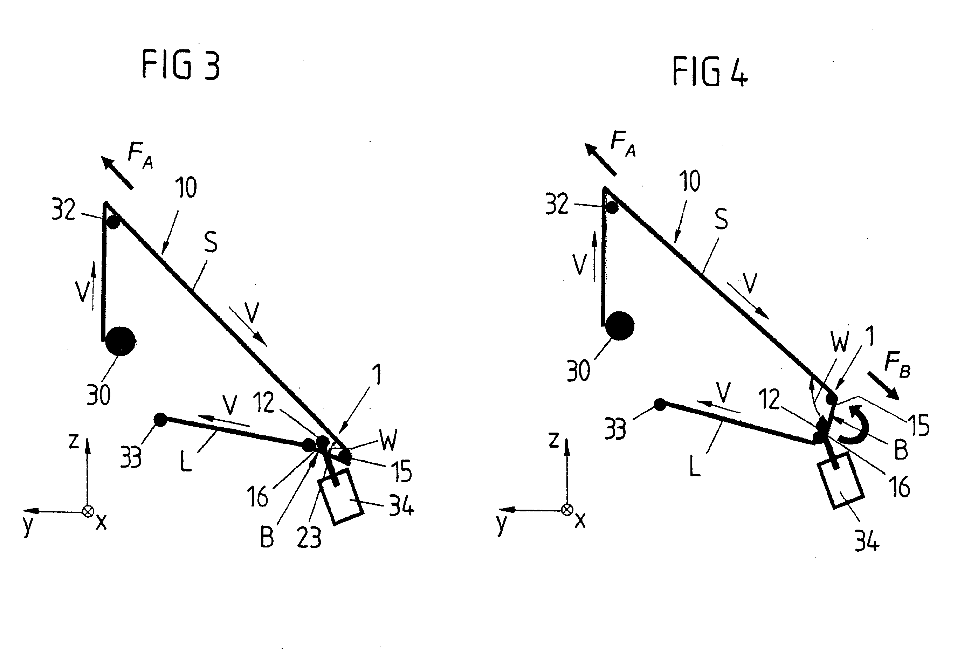

Figur 3 zeigt in Verbindung mit den Figuren 5 bis 8 eine schematische Ansicht der in der Figur 1 gezeigten Sicherheitsgurtanordnung 2, mit einem Schlossumlenkelement 1 zum Begrenzen einer den Sicherheitsgurt 10 entlang der Gurtverlaufsrichtung V straffenden Kraft. Eine derartige Kraft wird beispielsweise beim Verzögern des Fahrzeuges entlang der Fahrzeuglängsachse x aufgrund der Trägheit des angegurteten Fahrzeuginsassen in den Sicherheitsgurt 10 eingeleitet.

Das Schlossumlenkelement 1 weist einen rahmenförmigen Körper 23 auf, der eine Durchgangsöffnung O, die der Sicherheitsgurt 10 frei durchlaufen kann, begrenzt. Vom Körper 23 des Schlossumlenkelementes 1 steht entlang einer Längserstreckungsrichtung 27 eine Gurtschlosszunge 28 ab, die ebenso flächig wie der Körper 23 des Schlossumlenkelementes ausgebildet ist und in der gleichen Erstreckungsebene erstreckt ist. Die Gurtschlosszunge 28 ist entlang der Längserstreckungsrichtung 27 in eine Gurtschlossschnalle 34 einsteckbar und dort arretierbar. Der rahmenförmige Körper 23 weist quer zur Längserstreckungsrichtung 27 einander gegenüberliegende Ränder 13, 14 der Durchgangsöffnung O auf, an denen ein bewegbarer Bereich B des Schlossumlenkelementes 1 in Form eines Hebels um eine als Torsionsstange ausgebildete Drehachse 12 schwenkbar festgelegt ist, die quer zur Längserstreckungsrichtung 27 der Gurtschlosszunge 28 zwischen den beiden Rändern 13, 14 des Körpers 23 verläuft.

Der Hebel B des Schlossumlenkelementes 1 ist flächig rechteckförmig ausgeformt und weist einen ersten Arm 15 und einen zweiten Arm 16 auf, die entgegengesetzt zueinander entlang einer Erstreckungsrichtung 17 des Hebels B von der Drehachse 12 bzw. der Torsionsstange 12 des Hebels B abstehen. Dabei ist der erste Arm 15 entlang der Erstreckungsrichtung 17 des Hebels B länger ausgebildet als sein zweiter Arm 16. Der Hebel B ist um seine Drehachse 12 aus einer Anfangsstellung in eine Endstellung verschwenkbar. Dabei setzt die Torsionsstange 12 der Schwenkbewegung ein vordefinierbares Drehmoment entgegen, so dass der Hebel B erst beim Überschreiten eines Mindestdrehmomentes aus der Anfangsstellung in seine Endstellung verschwenkbar ist.

In der Anfangsstellung des Hebels B steht der erste Arm 15 des Hebels B von einer dem anzugurtenden Fahrzeuginsassen I abgewandten Seite des Körpers 23 aus der Erstreckungsebene des Körpers 23 hinaus und bildet dabei einen spitzen Winkel mit dem Körper 23 bzw. der Gurtschlosszunge 28 des Schlossumlenkelementes 1. In dieser Anfangsstellung des Hebels B bzw. des ersten Armes 15 des Hebels B ist der Sicherheitsgurt 10 entlang der Gurtverlaufsrichtung V vom Schulterumlenkelement 23 abgehend - oberhalb des Körpers 23 des Schlossumlenkelementes 1 verlaufend - zum ersten Arm 15 des Hebels B geführt und um diesen entlang der Gurtverlaufsrichtung V herumgelegt, so dass der Sicherheitsgurt 10 in Richtung auf das Becken des Fahrzeuginsassen I umgelenkt wird. Dabei liegt der Sicherheitsgurt 10 unter einer Vorspannung, die bei einem an einen Fahrzeuginsassen I angelegten Sicherheitsgurt 10 durch den Gurtaufroller 30 bereitgestellt wird, an einer schmalen Stirnseite des ersten Armes 15 des Hebels B an, die dem Körper 23 des Schlossumlenkelementes 1 abgewandt ist und einen Anlagebereich A des ersten Armes 15 des Hebels B bildet.

Der bewegbare Bereich B definiert somit eine Unterteilung des Sicherheitsgurtes 10 in zwei Gurtsegmente, nämlich einen Schultergurt S, der entgegen der Gurtverlaufsrichtung V vom Anlagebereich A abgeht und einen Beckengurt L, der in der Gurtverlaufsrichtung V vom Anlagebereich A abgeht und durch die Durchgangsöffnung O des Körpers 23 hindurch entlang der Gurtverlaufsrichtung V zur Gurtverankerung 33 verläuft.

Über den Anlagebereich A ist eine den Sicherheitsgurt 10 entlang der Gurtverlaufsrichtung V straffende Kraft derart in den Hebel B einleitbar, dass dieser aus seiner Anfangsstellung gemäß Figur 6 in seine Endstellung gemäß Figur 7 bewegt wird. Dabei setzt die Torsionsstange 12 der Schwenkbewegung des Hebels B aus der Anfangsstellung in die Endstellung ein vorbestimmbares Drehmoment entgegen, so dass der Hebel B erst bei einer in den Sicherheitsgurt 10 eingeleiteten Mindestkraft, z.B. infolge einer unfallbedingten Verzögerung des Kraftfahrzeuges, aus der Anfangsstellung in die Endstellung verschwenkt wird. Reicht eine den Sicherheitsgurt 10 entlang der Gurtverlaufsrichtung V spannende Kraft aus, den Hebel B aus der Anfangsstellung in die Endstellung zu verschwenken, so wird hierbei der erste Arm 15 des Hebels B mit samt dem Anlagebereich A an dem der Sicherheitsgurt 10 unter Vorspannung anliegt, entgegen der Gurtverlaufsrichtung V des Schultergurtes S in Richtung auf das Schulterumlenkelement 32 verschwenkt, wodurch der Schultergurt S entgegen der Gurtverlaufsrichtung V entlastet wird.

Gleichzeitig wird der zweite Arm 16 des Hebels B, der in der Anfangsstellung an einer dem Fahrzeuginsassen zugewandten Seite des Körpers 13 aus der Erstreckungsebene des Körpers 23 des Schlossumlenkelementes 1 hinaus steht, in Richtung auf den Körper 23 verschwenkt, wobei er in der Endstellung des Hebels B den Sicherheitsgurt 10 zwischen seinem freien Ende und einem stegförmigen, die Durchgangsöffnung O unterhalb der Drehachse 12 begrenzenden Randbereich 21 der Durchgangsöffnung O einklemmt, so dass der Gurtdurchlauf des Sicherheitsgurtes 10 durch die Durchgangsöffnung O gesperrt ist.

Im Ergebnis wird hierdurch lediglich die den Schultergurt S entlang dessen Gurtverlaufsrichtung V spannende Kraft F_{B} am Schlossumlenkelement 1 begrenzt, während die den Beckengurt L spannenden Kräfte durch Sperren des Gurtdurchlaufes auf konstantem Niveau gehalten werden. Bei typischen Unfallbedingungen ist eine Begrenzung jener Kraft F_{B} auf 2,5 kN möglich, gegenüber einer am Schultersegment S angreifenden Kraft F_{B} von 6 kN am Schlossumlenkelement 1, für den Fall, dass der Sicherheitsgurt 10 das Schlossumlenkelement 1 frei durchlaufen kann und eine Kraftbegrenzung lediglich am Gurtaufroller 30 erfolgt.

Zusätzlich zur Schwenkbewegung des Hebels B aus der Anfangsstellung in die Endstellung, ist der Hebel B gemäß Figur 8 dazu eingerichtet, aus einer ersten Position entgegen der Längserstreckungsrichtung 27 der Gurtschlosszunge 28 in eine zweite Position linear verfahren werden, in der der Hebel B - bezogen auf einen in ein Kraftfahrzeug eingebauten Zustand - entlang der vertikalen Fahrzeugachse z näher am Schulterumlenkelement 32 gelegen ist als in seiner ersten Position. Somit kann auch mittels des linearen Verfahrens des Hebels B eine Entlastung des Schultergurtes S entlang der Gurtverlaufsrichtung Verfolgen, die eine zusätzliche Begrenzung der am Schlossumlenkelement 1 wirkenden Gurtkraft F_{B} ermöglicht.

Zum linearen Verfahren des Hebels B ist dessen Torsionsstange 12 jeweils mit einem freien Ende 12a in einer Führungsnut 12b gelagert, wobei die Führungsnuten 12b einander gegenüberliegend an den beiden Rändern 13, 14 des Körpers 23 ausgebildet sind und entlang der Längserstreckungsrichtung 27 verlaufen. Vorzugsweise sind an den beiden Führungsnuten 12b Federelemente vorgesehen, die einer Verschiebungsbewegung der Torsionsstange 12 bzw. des Hebels B aus der ersten Position in die zweite Position eine vordefinierbare Rückstellkraft entgegensetzen.

Figur 4 zeigt eine schematische Ansicht der Sicherheitsgurtanordnung 2 mit einem in der Endstellung befindlichen Hebel B. Die Entlastung des Schultergurtes S entlang der Gurtverlaufsrichtung V lässt sich auch durch den Winkel W charakterisieren, den der erste Arm 15 des Hebels B mit dem vom ersten Arm 15 entgegen der Gurtverlaufsrichtung V abgehenden Schultergurt S einschließt. In der Anfangsstellung weist der Anlagebereich A, d.h. die Stirnseite des ersten Armes 15 entlang der Gurtverlaufsrichtung einen größeren Abstand zum Schulterumlenkelement 32 auf, als in der Endstellung des Hebels B. Hierdurch ist in der Anfangsstellung des Hebels B der zwischen dem ersten Arm 15 und dem Schultergurt S eingeschlossene Winkel W kleiner als in der Endstellung des Hebels B, in der der erste Arm 15 des Hebels B in Richtung auf den Fahrzeuginsassen bzw. das Schulterumlenkelement 32 verschwenkt ist.

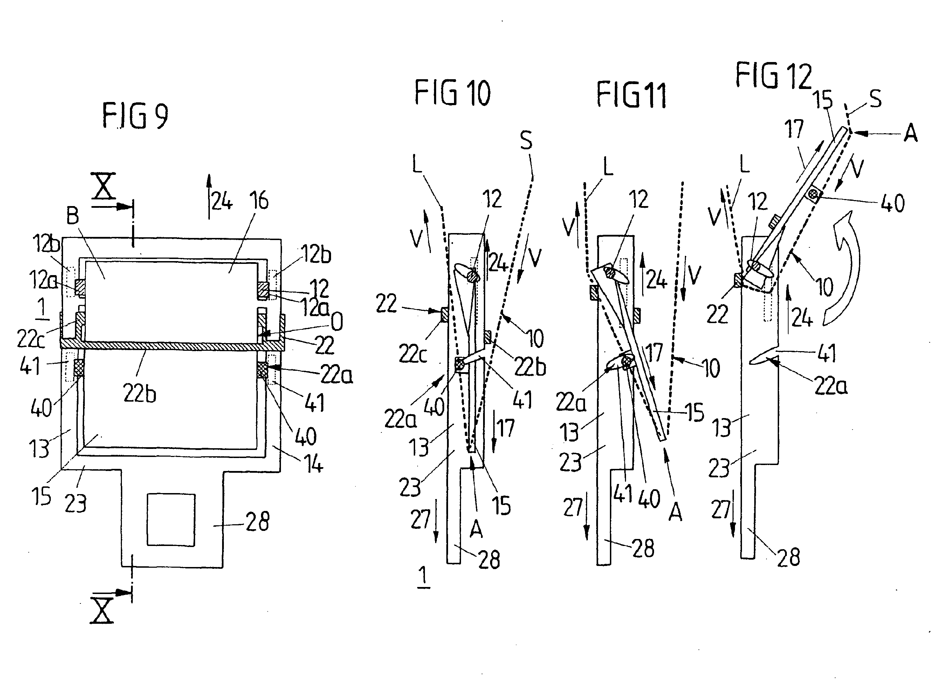

Figur 9 zeigt eine schematische Draufsicht auf eine Abwandlung des in den Figuren 5 bis 8 gezeigten Schlossumlenkelementes 1, wobei im Unterschied zur Figur 5 die Schwenkbewegung des Hebels B aus der Anfangsstellung gemäß Figur 10 in seine Endstellung gemäß Figur 12 nicht durch einen stegförmigen Randbereich 21 der Durchgangsöffnung O begrenzt wird, sondern durch ein Sperrelement 22, das den rahmenförmigen Körper 23 und den Hebel B, und zwar dessen ersten Arm 15, im Querschnitt umgreift. Das Sperrelement 22 weist einen ersten und einen zweiten entlang der Drehachse 12 erstreckten Schenkel 22b, 22c auf, von denen der erste Schenkel 22b zur Anlage am ersten Arm 15 des Hebels B und der zweite Schenkel 22c zur Anlage am zweiten Arm 16 des Hebels B vorgesehen ist.

In der Anfangsstellung des Hebels B sind die beiden Schenkel 22b, 22c des Sperrelementes 22 jeweils beabstandet zum ersten bzw. zweiten Arm 15, 16 des Hebels B angeordnet. Beim Schwenken des Hebels B aus seiner Anfangsstellung in seine Endstellung wird der zweite Arm 16 des Hebels B gegen den zweiten Schenkel 22c geführt und unter Zwischenlage des Sicherheitsgurtes 10 gegen den zweiten Schenkel 22c des Sperrelementes 22 gedrückt. Hierdurch wird der Durchlauf des Sicherheitsgurtes 10 durch die Durchgangsöffnung O gesperrt. Des Weiteren wird der erste Arm 15 des Hebels B beim Schwenken des Hebels B in dessen Endstellung gegen den ersten Schenkel 22b des Sperrelementes 22 geführt und gegen diesen gedrückt, wobei das Sperrelement 22 bzw. der zweite Schenkel 22c elastisch deformiert wird. Hierdurch übt das Sperrelement 22 ein Drehmoment auf den Hebel B aus, das der Schwenkbewegung des Hebels B in dessen Endstellung entgegenwirkt und diese in der Endstellung begrenzt.

Bei dem in den Figuren 9 bis 12 gezeigten Ausführungsbeispiel des Schlossumlenkelementes 1 kann der Hebel B ebenfalls entgegen der Längserstreckungsrichtung 27 aus einer ersten Position in eine zweite Position linear verfahren werden, wie anhand der Figuren 5 bis 8 bereits geschildert. Das lineare Verfahren des Hebels B in den oben beschriebenen Ausführungsformen ist jedoch nicht zwingend notwendig, sondern stellt eine optionale, zusätzliche Maßnahme dar.

Im Unterschied zu dem in den Figuren 5 bis 8 gezeigten Ausführungsbeispiel des Schlossumlenkelementes 1 ist bei dem in den Figuren 9 bis 12 gezeigten Ausführungsbeispiel des Schlossumlenkelementes 1 eine als Rastverbindung ausgebildete lösbare Verbindung 22a vorgesehen, mittels der der erste Arm 15 des Hebels B in seiner Anfangsstellung am Körper 23 des Schlossumlenkelementes 1 arretierbar ist. Die lösbare Verbindung 22a wird dabei durch zwei Stifte 40 gebildet, die in entgegengesetzten Richtungen von einander abgewandten Seiten des ersten Armes 15 entlang der Drehachse 12 des Hebels B abragen und jeweils in eine an den beiden Rändern 13, 14 des Körpers 23 ausgebildete Ausnehmungen 41 eingreifen können, wobei die beiden Stifte 40 in der Anfangsstellung des Hebels B in den Ausnehmungen 41 einrasten. Die Rastverbindung 22a ist dabei derart ausgelegt, dass die Stifte 40 des ersten Armes 15 erst bei einem vorbestimmbaren, am Hebel B angreifenden Mindestdrehmoment außer Eingriff mit den Ausnehmungen 41 geraten. Hierdurch kann insbesondere auf eine schwenkbare Festlegung des Hebels B am Körper 23 über die Torsionsstange 12 verzichtet werden und stattdessen der Hebel B über eine starre Welle 12 am Körper 23, und zwar an den beiden einander gegenüberliegenden Rändern 13, 14 des Körpers 23 gelagert werden.

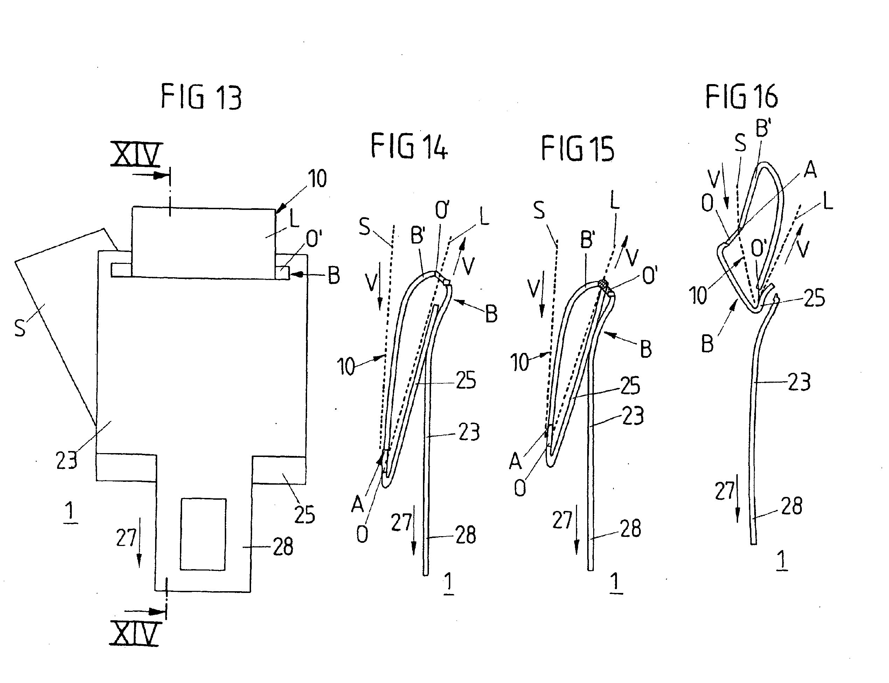

Figur 13 zeigt im Zusammenhang mit den Figuren 14 bis 16 eine weitere Ausführungsform des Schlossumlenkelementes 1, bei der im Unterschied zu den Figuren 5 bis 12 der bewegbare Bereich B des Schlossumlenkelementes 1 nicht durch einen verschwenkbaren Hebel gebildet wird, sondern durch einen einstückig mit dem Körper 23 des Schlossumlenkelementes 1 verbundenen bewegbaren Bereich B, der durch Einleiten einer vorbestimmbaren Kraft in den Sicherheitsgurt 10, die den Sicherheitsgurt 10 entlang der Gurtverlaufsrichtung V spannt, derart aus einer Anfangsstellung in eine Endstellung deformierbar ist, dass einerseits der Gurtdurchlauf des Sicherheitsgurtes 10 durch die Gurtumlenkeinrichtung 1 gesperrt ist und andererseits die an der Gurtumlenkeinrichtung 1 am Schultergurt S angreifende Kraft F_{B} infolge einer Entlastung des Schultergurtes S entlang der Gurtverlaufsrichtung V begrenzt ist.

Das Schlossumlenkelement 1 weist einen flächigen Körper 23 auf, von dem wie zuvor beschrieben eine Gurtschlosszunge 28 in einer Längserstreckungsrichtung 27 absteht. Die Gurtschlosszunge 28 ist dabei in der Erstreckungsebene des Körpers 23 des Schlossumlenkelementes 1 erstreckt. Der bewegbare Bereich B des Schlossumlenkelementes 1 geht - der Gurtschlosszunge 28 entlang der Längserstreckungsrichtung 27 gegenüberliegend - entgegen der Längserstreckungsrichtung 27 vom Körper 23 des Schlossumlenkelementes 1 einstückig ab und ist im Querschnitt zu einer Schlaufe B' ausgeformt, mit einem längs erstreckten Endabschnitt 25, der in der Gurtverlaufsrichtung V des Beckengurtes L entlang eines Teilstücks des Beckengurtes L verläuft.

Der Schultergurt S des Sicherheitsgurts 10 verläuft ausgehend von dem nicht gezeigten Schulterumlenkelement 32 entlang der Gurtverlaufsrichtung V zu einer an der Schlaufe B' ausgebildeten Durchgangsöffnung O und ist durch diese hindurchgeführt, wobei der Sicherheitsgurt 10 um einen als Anlagebereich A ausgebildeten Randabschnitt der Durchgangsöffnung O, der in der Anfangsstellung des bewegbaren Bereiches B dem Fahrzeugboden zugewandt ist, herumgelegt ist und an diesem Anlagebereich A unter einer durch den Gurtaufroller 30 bereitgestellten Vorspannung anliegt. Vom Anlagebereich A verläuft der solchermaßen umgelenkte Sicherheitsgurt 10 als Beckengurt L entlang des freien Endabschnitts 25 zu einer weiteren Durchgangsöffnung O' der Schlaufe B', die der einen Durchgangsöffnung O entlang der Gurtverlaufsrichtung V bzw. entlang des Endabschnittes 25 der Schlaufe B' gegenüber liegt.

Der die Schlaufe B' umfassende bewegbare Bereich B ist derart ausgelegt, dass eine am Sicherheitsgurt 10 angreifende Kraft, die den Sicherheitsgurt 10 entlang der Gurtverlaufsrichtung V spannt und eine vorbestimmbare Mindestkraft übersteigt, derart in den Anlagebereich A des bewegbaren Bereiches B eingeleitet wird, dass zunächst der freie Endabschnitt 25 der Schlaufe B' entlang des Beckengurtes L gegen die weitere Durchgangsöffnung O' geführt wird, so dass er den dort hindurch laufenden Beckengurt L einklemmt. Hierdurch ist entsprechend der Figur 15 der Gurtdurchlauf durch die beiden Durchgangsöffnungen O, O' der Schlaufe B' insgesamt gesperrt.

Im weiteren Verlauf wird nun durch die in den Anlagebereich A eingeleitete Gurtkraft, die den Sicherheitsgurt 10 entlang der Gurtverlaufsrichtung V spannt, der Anlagebereich A entgegen der Gurtverlaufsrichtung V des Schultergurtes S zum Schulterumlenkelement 32 bzw. zum rückzuhaltenden Fahrzeuginsassen I hin verlagert, und zwar unter Deformation des bewegbaren Bereiches B. Die Deformation des bewegbaren Bereiches B entspricht dabei im Wesentlichen einer Rotation der Schlaufe B' um den Bereich der weiteren Durchgangsöffnung O' in Richtung auf den Fahrzeuginsassen I bzw. das Schulterumlenkelement 32. Hierbei wird der Schultergurt S entlang der Gurtverlaufsrichtung V, wie bereits in der Figur 4 dargestellt, entlastet, was einer Begrenzung der beim Schlossumlenkelement 1 am Schultergurt S angreifenden und entlang dessen Gurtverlaufsrichtung V wirkenden Gurtkraft F_{B} zur Folge hat.

Die Deformation des bewegbaren Bereiches B infolge der im Rückhaltefall am Sicherheitsgurt 10 angreifenden Kraft, ist einerseits über die Form des bewegbaren Bereiches B, d.h. im Wesentlichen über die Form der Schlaufe B', sowie über den Materialaufbau des bewegbaren Bereiches B, der vorzugsweise aus einem Metall gefertigt ist, beeinflussbar. Insbesondere können die Stellen, um die herum eine Rotation der Schlaufe B' ausgeführt werden soll, eine geringere Materialstärke aufweisen, so dass eine Verformung vorzugsweise in diesem Bereich stattfindet. Solche Bereiche werden beispielsweise durch die Durchgangsöffnungen O, O' bereitgestellt, die den bewegbaren Bereich B lokal schwächen.

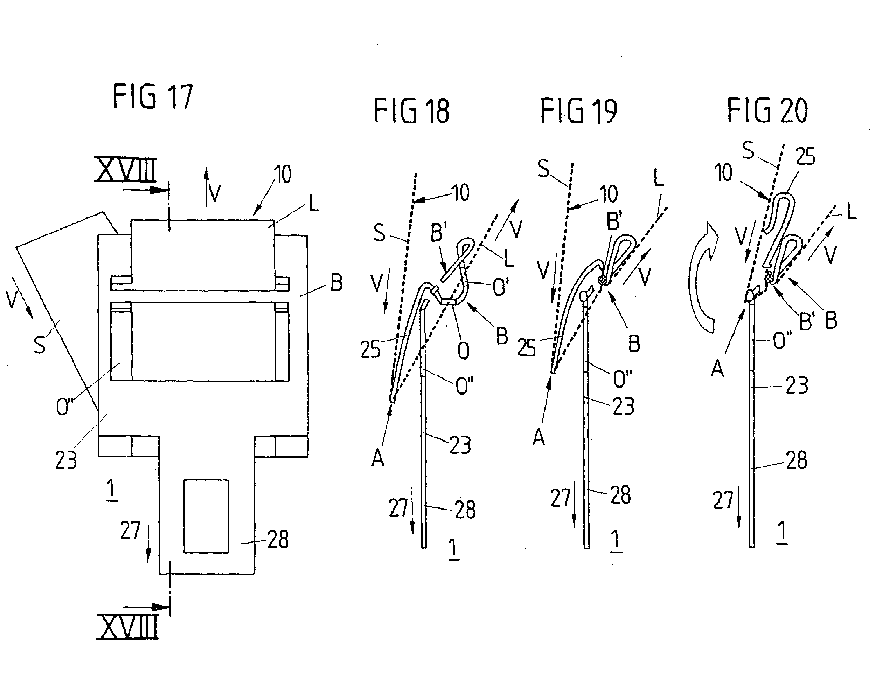

Die Figuren 17 bis 20 zeigen eine Abwandlung des in den Figuren 13 bis 16 gezeigten Schlossumlenkelementes 1. Dabei ist im Unterschied zu dem in den Figuren 13 bis 16 gezeigten Schlossumlenkelement 1 der bewegbare Bereich B in Form einer Schlaufe B' ausgebildet, die sich beim Deformieren des bewegbaren Bereiches B aus der Anfangsstellung in die Endstellung zuschnürt und den durch sie hindurch verlaufenden Beckengurt L einklemmt, so dass der Gurtdurchlauf durch die Gurtumlenkeinrichtung 1 gesperrt ist.

Hierzu verläuft der Schultergurt S des Sicherheitsgurtes 10 ausgehend vom Schulterumlenkelement 32 entlang der Gurtverlaufsrichtung V des Beckengurtes L zu einem freien Endabschnitt 25 des bewegbaren Bereiches B und ist um eine - in der Anfangsstellung des bewegbaren Bereiches B in Richtung auf den Fahrzeugboden weisende - Stirnseite des freien Endabschnitts 25 gelegt, die einen Anlagebereich A für den Sicherheitsgurt 10 bildet. Der Sicherheitsgurt 10 liegt unter Vorspannung, die durch den Gurtaufroller 30 bereitgestellt wird, an dem Anlagebereich A an, wobei der Sicherheitsgurt 10 am Anlagebereich A umgelenkt wird und in zwei Gurtsegmente unterteilt wird, nämlich den Schultergurt S und den Beckengurt L, wobei der Beckengurt L in seiner Gurtverlaufsrichtung V durch eine im Körper 23 des Schlossumlenkelementes 1 ausgebildete Öffnung O" des Schlossumlenkelementes 1 hindurch verläuft. Mit dieser Öffnung O" fluchtet eine Durchgangsöffnung O sowie eine der Durchgangsöffnung entlang der Gurtverlaufsrichtung V des Beckengurtes L gegenüber liegende weitere Durchgangsöffnung O', die jeweils an einem als geschlossene Schlaufe B' ausgebildeten Abschnitt des bewegbaren Bereiches B ausgebildet sind.

Die Schlaufe B' ist derart bezüglich des Anlagebereiches A des freien Endabschnitts 25 des bewegbaren Bereiches B angeordnet, dass eine den Sicherheitsgurt 10 entlang der Gurtverlaufsrichtung V spannende Kraft, die oberhalb einer bestimmten Mindestkraft liegt, den Anlagebereich A, um den der Sicherheitsgurt 10 herumgelegt ist, entgegen der Gurtverlaufsrichtung V des Schultergurtes S verlagert, wobei der Endabschnitt 25 des bewegbaren Bereiches B die Schlaufe B' zusammendrückt, so dass der die Schlaufe B' durchquerende Beckengurt L in der zusammengeschnürten Schlaufe B' eingeschnürt wird. Hierdurch ist der Gurtdurchlauf durch die beiden Durchgangsöffnungen O, O' bzw. durch die Öffnungen O" des Körpers 23 des Schlossumlenkelementes 1 gesperrt.

Gleichzeitig wird durch die Deformation des bewegbaren Bereiches B aus der Anfangsstellung des bewegbaren Bereiches in die Endstellung entsprechend der Figur 20 der Anlagebereich A in Richtung auf den Fahrzeuginsassen bzw. das Schulterumlenkelement 32 verlagert, wodurch der Schultergurt S entlang der Gurtverlaufsrichtung entlastet wird. Hierdurch wird die beim Schlossumlenkelement 1 in der Gurtverlaufsrichtung V des Schultergurtes S am Schultergurt S angreifende Gurtkraft F_{B} wie zuvor beschrieben beschränkt.

Die Deformation des bewegbaren Bereiches B aus der Anfangsstellung in die Endstellung besteht im Wesentlichen aus einer Rotation des freien Endabschnittes 25 des bewegbaren Bereiches B, um einen die Durchgangsöffnung O beinhaltenden Bereich der Schlaufe B' in Richtung auf den Fahrzeuginsassen I bzw. das Schulterumlenkelement 32.

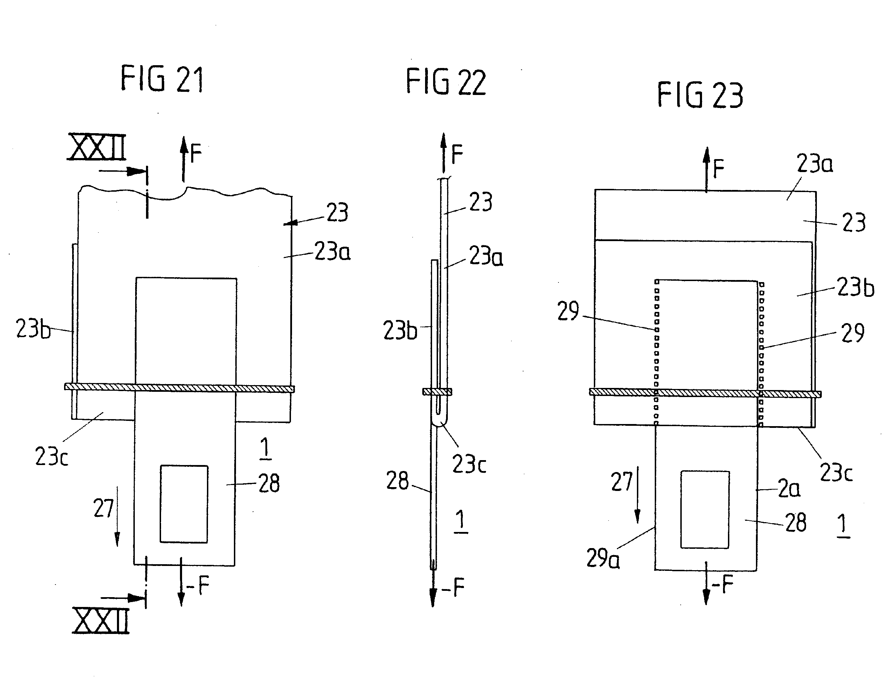

Figur 21 zeigt im Zusammenhang mit den Figuren 22 und 23 einen Mechanismus, mit dem die im Rückhaltefall beim Schlossumlenkelement 1 am Schultergurt S angreifende Gurtkraft F_{B} zusätzlich beschränkt werden kann. Hierzu ist der flächige Körper 23 des Schlossumlenkelementes 1 der in den Figuren 5 bis 20 beschriebenen Art an einem dem bewegbaren Bereich B entlang der Längserstreckungsrichtung 27 gegenüber liegenden flächigen Abschnitt, der vorzugsweise aus einem Metall gefertigt ist, umgebogen, so dass jener Abschnitt des Körpers 23 in einen ersten Abschnitt 23a und einen dazu parallel verlaufenden, umgebogenen zweiten Abschnitt 23b unterteilt ist, die über einen gekrümmten Bereich 23c, der entlang einer quer zur Längserstreckungsrichtung 27 orientierten Richtung verläuft, miteinander verbunden sind.

Aus dem ersten Abschnitt 23a ist eine rechteckförmige Gurtschlosszunge 28 herausgestanzt, die im Gegensatz zum umgebogenen zweiten Abschnitt 23b nicht auf den ersten Abschnitt 23a des Körpers 23 gefaltet ist, sondern in einer Längserstreckungsrichtung 27 vom umgebogenen Abschnitt 23b absteht, wobei die flächige Gurtschlosszunge 28 in der Erstreckungsebene des umgebogenen, zweiten Abschnittes 23b verläuft.

Der umgebogene zweite Abschnitt 23b weist nun zwei entlang der Längserstreckungsrichtung 27 verlaufende, linienförmige Schwächungsbereiche 29 auf, die mit den entlang der Längserstreckungsrichtung 27 erstreckten äußeren Rändern 29a der Gurtschlosszunge 28 fluchten. Die Schwächungsbereiche 29 sind dabei derart ausgelegt, dass sie beim Angreifen einer Kraft F am Körper 23 entgegen der Längserstreckungsrichtung 27, die von der Gurtschlossschnalle 34 als Widerlager aufgenommen wird, entlang der Längserstreckungsrichtung 27 einreißen, wodurch die Gurtschlosszunge 28 entlang der Längserstreckungsrichtung 27 effektiv verlängert wird. Hierdurch wird der Körper 23 des Schlossumlenkelementes 1 - bezogen auf einen in ein Kraftfahrzeug eingebauten Zustand - entlang der vertikalen Fahrzeugachse z dem Schulterumlenkelement 32 angenähert und somit der Schultergurt S entlang der Gurtverlaufsrichtung V entlastet, was die beim Schlossumlenkelement 1 am Schultergurt angreifende Gurtkraft F_{B} zusätzlich begrenzt.

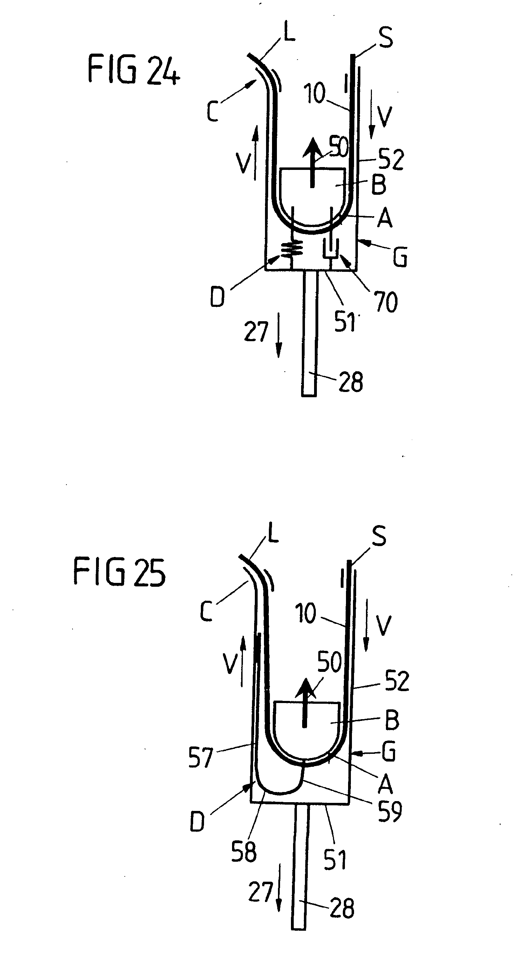

Figur 24 zeigt eine schematische, geschnittene Ansicht einer weiteren Variante eines Schlossumlenkelementes 1, bei dem der bewegbare Bereich B des Schlossumlenkelementes 1 linear verschieblich entlang einer Bewegungsrichtung 50 bezüglich eines Gehäuses G ausgebildet ist, das den bewegbaren Bereich B umschließt, um eine Aufnahme für den bewegbaren Bereich B zu bilden, und zwar vorzugsweise quer zu jener Bewegungsrichtung 50.

Der bewegbare Bereich B ist als ein Umlenkkörper ausgebildet, um den der Sicherheitsgurt 10 entlang der Gurtverlaufsrichtung V zum Umlenken des Sicherheitsgurtes 10 um insbesondere 180° herumgelegt ist, wobei der Sicherheitsgurt 10 an einem Anlagebereich A des bewegbaren Bereiches B anliegt, der vorzugsweise konvex ausgebildet ist und entlang der Bewegungsrichtung 50 einem quer zur Bewegungsrichtung 50 erstreckten Boden 51 des Gehäuses G gegenüberliegt. Innerhalb des Gehäuses G verlaufen die beiden Gurtsegmente S, L entlang der Bewegungsrichtung 50, mit Ausnahme des am Anlagebereich A anliegenden Abschnitts des Sicherheitsgurtes 10.

Vom Boden 51 steht entlang der Bewegungsrichtung B eine den bewegbaren Bereich B umlaufenden Wandung 52 ab, die eine dem Boden 51 gegenüberliegende offene Deckfläche begrenzt, durch die der Sicherheitsgurt 10 in Form des Schultersegmentes S in das Gehäuse G entlang der Gurtverlaufrichtung V hinein geführt ist und durch die er in Form des (umgelenkten) Beckensegmentes L aus dem Gehäuse G heraus geführt ist, wobei für die beiden Gurtsegmente S, L an einem Randbereich der offenen Deckfläche Führungen vorgesehen sind, die die beiden Segmente S, L jeweils im Querschnitt umgreifen, wobei die Führung für das Beckensegment L eine Krümmung aufweist, so dass das Beckensegment L eine Ablenkung entlang einer quer zur Bewegungsrichtung 50 orientierten Richtung erfährt.

Von einer dem bewegbaren Bereich B abgewandten Seite des Bodens 51 des Gehäuses G steht entlang der Bewegungsrichtung 50 des bewegbaren Bereiches B eine Gurtschlosszunge 28 ab, die zum Verriegeln eines Gurtschlosses in einen Gurtschlosskörper (Gurtschlossschnalle) einsteckbar ist. Die Gurtschlosszunge ist längs erstreckt entlang einer Längserstreckungsrichtung 27 ausgebildet, die mit der Bewegungsrichtung 50 des bewegbaren Bereiches B fluchtet. Der Gurtschlosskörper ist vorzugsweise zur Befestigung an einer Fahrzeugtragstruktur oder einem Fahrzeugsitz eingerichtet und vorgesehen.

Der bewegbare Bereich B ist über zumindest ein Deformationselement in Form eines ersten Federelementes D sowie über ein Dämpfungselement 70 zum Dämpfen der Bewegung (Translation) des ersten Federelementes D (und somit des bewegbaren Bereichs B) mit dem Boden 51 des Gehäuses G gekoppelt.

Fällt eine mittels des Sicherheitsgurtes 10 bestimmungsgemäß angegurtete Person bei einer gefährlichen Situation infolge einer verzögerungsbedingten Trägheitsbewegung in den Sicherheitsgurt 10, so wirkt auf diesen eine Kraft, die den Sicherheitsgurt 10, also das Schultersegment S und das Beckensegment L, entlang der Gurtverlaufsrichtung V spannt, wobei über den Anlagebereich A eine Kraft in den bewegbaren Bereich B eingeleitet wird, die diesen aus einer näher am Boden 51 gelegenen Anfangstellung entlang der Bewegungsrichtung B, d.h., entgegen der Gurtverlaufsrichtung V des Schultersegmentes S in eine Endstellung verlagert, wobei dem Verstellweg des bewegbaren Bereiches B, dessen Länge entlang der Bewegungsrichtung 50 bei vorgegebener, auf den bewegbaren Bereich B in Bewegungsrichtung 50 einwirkender Kraft durch die Federkonstante des ersten Federelementes D bestimmt ist, einer Entlastung des Schultersegments S entspricht, die eine Begrenzung der resultierenden, an dem Schultersegment S angreifenden Kraft bewirkt. Mittels des Dämpfungselementes 70 wird eine Schwingungsneigung des ersten Federelementes D unterdrückt (z.B. aperiodischer Grenzfall).

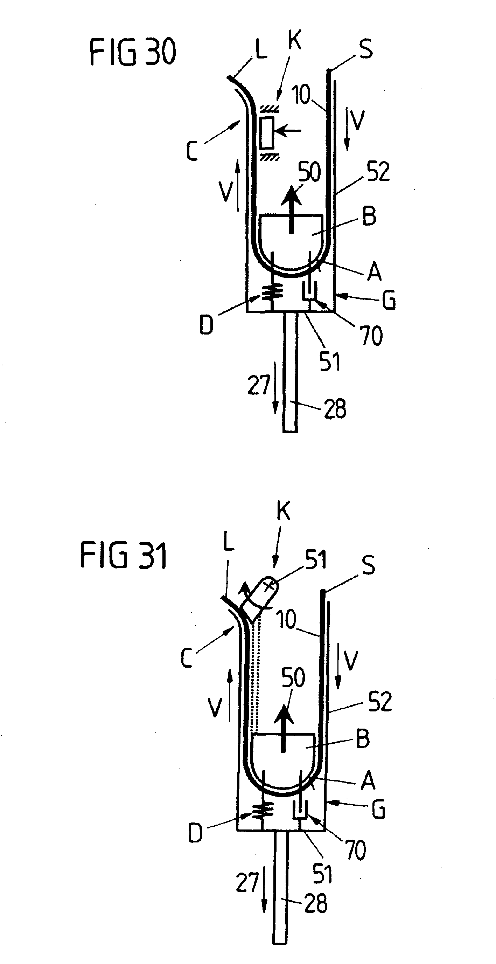

Damit lediglich eine Entlastung (Kraftbegrenzung) des Schultersegmentes S erfolgt, muss zusätzlich der Gurtdurchlauf des Sicherheitsgurtes 10 durch das Schlossumlenkelement 1 gesperrt werden, so dass die Länge des Beckensegmentes L (weiteres Gurtsegment) konstant bleibt. Hierzu kann der Sicherheitsgurt 10 gemäß den Figuren 30, 31, 32 und 33 an einem Arretierbereich C des Schlossumlenkelementes 1 festgelegt, wobei es sich bei dem Arretierbereich C bevorzugt um einen Bereich des Gehäuses G des Schlossumlenkelementes 1 handelt. Bevorzugt wird der Sicherheitsgurt 10 jedoch alternativ zu den Figuren 30 - 33 durch den bewegbaren Bereich B selbst am Schlossumlenkelement festgelegt, und zwar bevorzugt bevor der bewegbare Bereich B seine Endstellung erreicht.

Gemäß Figur 30 ist der Arretierbereich C an einer dem bewegbaren Bereich B zugewandten Innenseite der Wandung 52 ausgebildet, und zwar bevorzugt an einem die offene Deckfläche des Gehäuses G berandenden Randbereich der Wandung 52. Ein dem Arretierbereich C zugeordnetes Klemmelement K ist dabei entlang einer quer zur Bewegungsrichtung 50 orientierten Richtung aus einer ersten Position, in der der Sicherheitsgurt 10 am Arretierbereich C entlang gleiten kann, in eine zweite Position verschiebbar, in der das Klemmelement K den Sicherheitsgurt 10 gegen den Arretierbereich C drückt, so dass der Sicherheitsgurt 10 am Arretierbereich C festgelegt ist. Dieses Festlegung kann dabei derart beschaffen sein, dass ab einem bestimmten Kraftniveau ein Durchrutschen des Sicherheitsgurtes, d.h., der Sicherheitsgurt gleitet am Arretierbereich C entlang, eintritt. Eine Aktuierung des Klemmelementes K erfolgt entweder separat durch eine zusätzliche Bewegungserzeugungsvorrichtung oder wird durch den bewegbaren Bereich B bewirkt, der das Klemmelement K sowohl auslösen als auch antreiben kann.

Gegenüber dem linear verschieblichen Klemmelement K der Figur 30, ist das Klemmelement K der Figur 31 zwischen zwei Positionen hin und her schwenkbar am besagten Randbereich des Gehäuses G gelagert, wobei das Klemmelement K wie vorstehend beschrieben, in seiner zweiten Position den Sicherheitsgurt 10 gegen den Arretierbereich C drückt. Dabei erhöht sich mit steigender Auslenkung des Klemmelementes K die in den Sicherheitsgurt 10 am Arretierbereich C eingeleitete Klemmkraft. Eine Aktuierung des Klemmelementes K kann in der gleichen Weise erfolgen wie bei einem linear verschieblichen Klemmelement K (vgl. Figur 30).

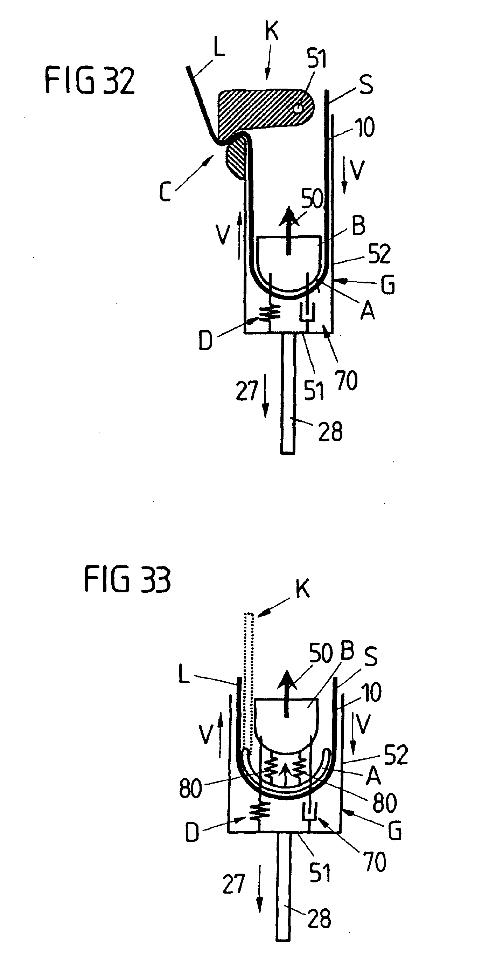

Bei dem in der Figur 32 gezeigten Schlossumlenkelement 1 ist das Klemmelement K im Unterschied zur Figur 31 derart ausgebildet, dass es den besagten Randbereich der Wandung 52 des Gehäuses G, der vorzugsweise entlang einer quer zur Bewegungsrichtung 50 orientierten Richtung von einer dem bewegbaren Bereich B abgewandten Außenseite der Wandung 52 abragt, in der zweiten Position, in der das Klemmelement K den Sicherheitsgurt 10 zum Sperren des Gurtdurchlaufs gegen den Arretierbereich C drückt, mit einer entlang der Bewegungsrichtung 50 vom Klemmelement K abragenden Nase hintergreift, so dass der um die Nase herumgelegte Sicherheitsgurt 10 (Beckengurt L) vorzugsweise um 180° umgelenkt wird.

Bei dem in der Figur 33 gezeigten Schlossumlenkelement 1 ist der Anlagebereich A im Querschnitt konvex-konkav ausgebildet und über zumindest ein zweites Federelement 80 mit einer konvex gekrümmten, der konkaven Seite des Anlagebereiches A zugewandten Seite des bewegbaren Bereich B verbunden. Der Anlagebereich A ist daher bezüglich des bewegbaren Bereichs B aus einer ersten Position in eine zweite, näher am bewegbaren Bereich B gelegene Position verschiebbar, und zwar unter Spannung des mindestens einen zweiten Federelementes 80. Diese Bewegung wird durch einen um den Anlagebereich A herumgelegten Sicherheitsgurt 10 bewirkt, wenn sich dieser infolge eines Unfalls entlang der Gurtverlaufsrichtung V spannt und eine Kraft entgegen der Gurtverlaufsrichtung V des Schultersegmentes S auf den Anlagebereich A ausübt. Hierbei wird der Anlagebereich A in seine zweite, näher am bewegbaren Bereich B gelegene Position bewegt, und drückt sodann - bei deformiertem (zusammengedrückten) zweiten Federelement 80 - den bewegbaren Bereich B in dessen Endstellung, wobei das vorgenannte Deformationselement D in Form des ersten Federelementes eine rückstellende Kraft auf den bewegbaren Bereich B ausübt, die den bewegbaren Bereich in Richtung auf die Anfangsstellung vorspannt. Hierbei garantiert eine im Vergleich zum ersten Federelement D kleinere Federkonstante des mindestens einen zweiten Federelementes 80, dass der Anlagebereich A in seine zweite Position bewegt wird, bevor der bewegbare Bereich B durch die im Crashfall am Anlagebereich A angreifende Gurtkraft in die Endstellung bewegt wird.

Somit kann der Anlagebereich A als Arretierschalter eingesetzt werden. D.h., der Anlagebereich A ist vorzugsweise dazu ausgebildet beim Bewegen in seine zweite Position bzw. in der zweiten Position eine Bewegung eines der vorstehend beschriebenen Klemmelemente K auszulösen bzw. derart mit einem solchen Klemmelement K gekoppelt zu sein, dass der Anlagebereich A beim Bewegen in seine zweite Position eine Bewegung des Klemmelementes K in dessen zweite Position erzeugt.

Figur 25 zeigt eine schematische Schnittansicht einer Abwandlung des in der Figur 24 gezeigten Schlossumlenkelementes 1, wobei im Unterschied zur Figur 24 der bewegbare Bereich nicht über ein erstes Feder- bzw. Dämpfungselement mit dem Gehäuse G gekoppelt ist, sondern über eine Blechlasche D.

Die Blechlasche D weist einen ersten Schenkel 59 auf, der vom bewegbaren Bereich B entlang der Bewegungsrichtung 50 in Richtung auf den Boden 51 des Gehäuses G des Schlossumlenkelementes 1 absteht und über einen gekrümmten Verbindungsbereich 58 mit einem zweiten Schenkel 57 verbunden ist, der sich entlang der Bewegungsrichtung 50 zum Randbereich der Wandung 52 erstreckt und dort am Gehäuse G festgelegt ist.

Bei einer Beaufschlagung des bewegbaren Bereiches B mit einer durch den Sicherheitsgurt 10 im Crashfall vermittelten Kraft wird eine Rollbiegung der Blechlasche bewirkt, die der Bewegung des bewegbaren Bereichs B aus seiner Anfangstellung nahe des Bodens 51 in seine Endstellung nahe der offenen Deckfläche des Gehäuses G einen vordefinierbaren Widerstand entgegensetzt.

Beim Vorgang der Rollbiegung, der sich während der Bewegung des bewegbaren Bereiches B aus der Anfangs- in die Endstellung ereignet, wandert der gekrümmte Verbindungsbereich 58 zur offenen Deckfläche hin, was einer Verlängerung des ersten Schenkels 59 und einer Verkürzung des zweiten Schenkels 57 entspricht. Infolgedessen weist der bewegbare Bereich B in der Endstellung einen vergleichsweise größeren Abstand zum Boden 51 auf, was bei gleichzeitiger Festlegung des Sicherheitsgurtes 10 am Arretierbereich C eine entsprechende Entlastung (Kraftbegrenzung) des Schultersegmentes S bewirkt.

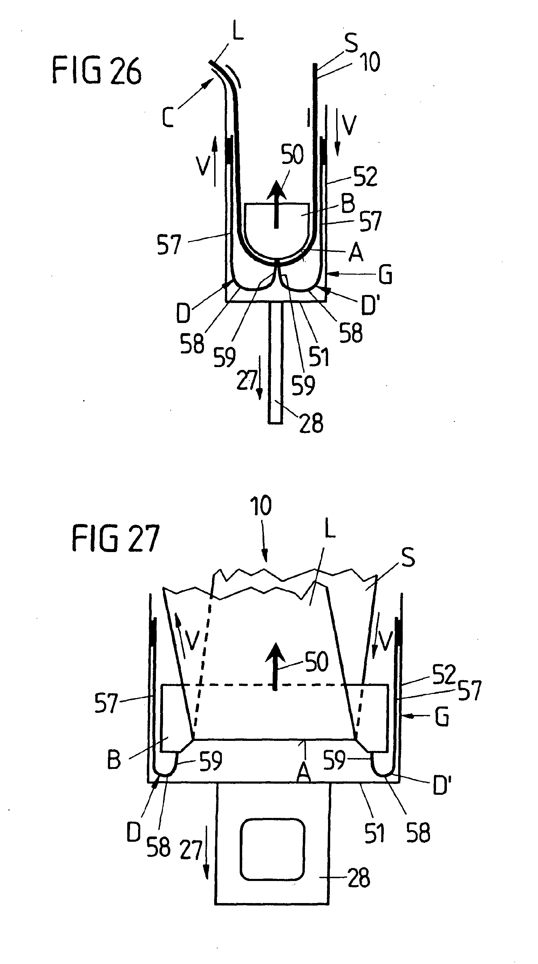

Gemäß der Figuren 26 und 27 sind zumindest zwei derartige Blechlaschen D vorgesehen, die sich quer zur Bewegungsrichtung 50 einander gegenüberliegen.

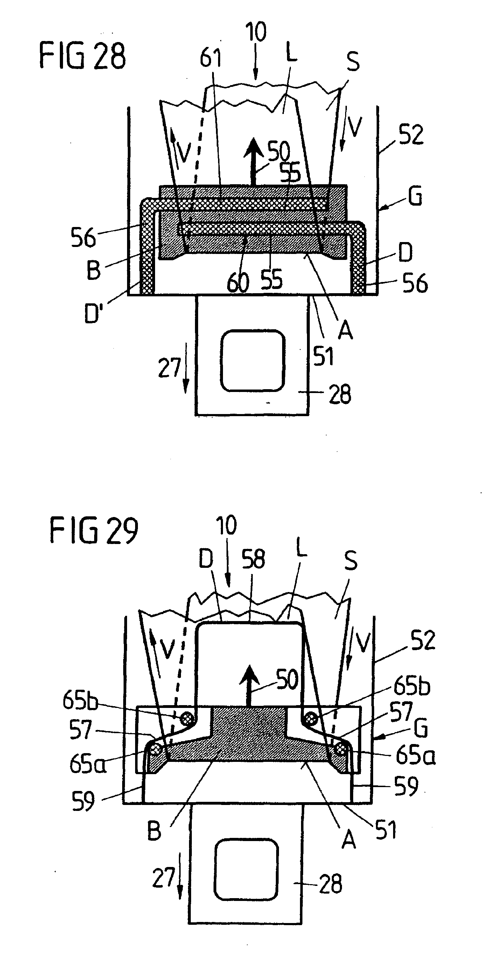

Figur 28 zeigt eine schematische, teilweise geschnittene Draufsicht auf eine Abwandlung des in der Figur 25 gezeigten Schlossumlenkelementes 1, bei dem der bewegbare Bereich B nicht mittels einer Blechlasche D mit dem Gehäuse G des Schlossumlenkelementes 1 gekoppelt ist, um der Bewegung aus der Anfangsstellung in die Endstellung einen vordefinierbaren Widerstand entgegenzusetzen, sondern mittels zweier Deformationselemente D, D' in Form von Stiften, insbesondere aus einem Metall, die jeweils mit einem ersten Abschnitt 55, der quer zur Bewegungsrichtung 50 erstreckt ist, in je eine sackförmige Ausnehmung 60, 61 des bewegbaren Bereiches B eingeführt sind und jeweils über einen zweiten, entlang der Bewegungsrichtung 50 erstreckten Abschnitt 56, der mit dem jeweiligen ersten Abschnitt 55 verbunden ist, am Boden 51 des Gehäuses G festgelegt sind. Dabei sind die beiden Ausnehmungen 60, 61 an einander abgewandten Seiten des bewegbaren Bereiches B ausgebildet, die jeweils der Wandung 52 zugewandt sind und verlaufen insbesondere parallel zueinander.

Bei einer Beaufschlagung des bewegbaren Bereiches B mit einer durch den Sicherheitsgurt 10 vermittelten Kraft, die in der Bewegungsrichtung 50 auf den bewegbaren Bereich B einwirkt, wird der bewegbare Bereich B unter Auszug der ersten Abschnitte 55 der beiden Stifte D, D" aus den Ausnehmungen 60 und 61 aus seiner Anfangstellung nahe des Bodens 51 in seine Endstellung nahe der offenen Deckfläche des Gehäuses G bewegt. Dabei werden die ausgezogenen Bereiche der ersten Abschnitte 55 der beiden Stifte D, D" jeweils umgebogen, so dass sie mit dem jeweiligen zweiten Abschnitt 56 fluchten und diesen effektiv verlängern. Damit wird der Bewegung des bewegbaren Bereiches B in die Endstellung ein vordefinierbarer Widerstand entgegengesetzt über den die erzielbare Kraftbegrenzung der am Schultersegment im Crashfall wirkenden Kraft einstellbar ist. Ein Festlegen des Sicherheitsgurtes 10 an einem Arretierbereich C des Gehäuses G kann nach den bereits dargelegten bzw. nachfolgenden Maßnahmen geschehen.

Figur 29 zeigt eine Abwandlung des in der Figur 28 dargestellten Prinzips. Hierbei ist im Unterschied zur Figur 28 der bewegbare Bereich B nicht über zwei deformierbare Stifte D,D' am Gehäuse G gelagert, sondern über ein Deformationselement D in Form einer zusammenhängende Schlaufe, die insbesondere aus einem Metall besteht und die über zwei freie Endabschnitte 59 mit dem Boden 51 des Gehäuses G verbunden ist, die sich ausgehend vom Boden 51 entlang der Bewegungsrichtung 50 zum bewegbaren Bereich B erstrecken, wo sie in je eine Ausnehmung des bewegbaren Bereiches B eingeführt sind, die jeweils durch zwei zueinander versetzt angeordnete Stifte 65a, 65b definiert sind. Diese Stifte 65a, 65b sind quer zur Bewegungsrichtung 50 derart zueinander versetzt angeordnet, dass sich die Schlaufe D entlang der Bewegungsrichtung B verjüngt. Durch die beidseitig zweimalige Umlenkung deformieren die Stifte 65a, 65b die Schlaufe D beim Bewegen des bewegbaren Bereichs B in die Endstellung, was jener Bewegung einen vordefinierbaren Widerstand entgegensetzt, über den die Kraftbegrenzung der am Schultersegment S im Crashfall angreifenden Kraft einstellbar ist. Ein Festlegen des Sicherheitsgurtes 10 an einem Arretierbereich C des Schlossumlenkelementes 1 kann nach den bereits dargelegten Maßnahmen geschehen.

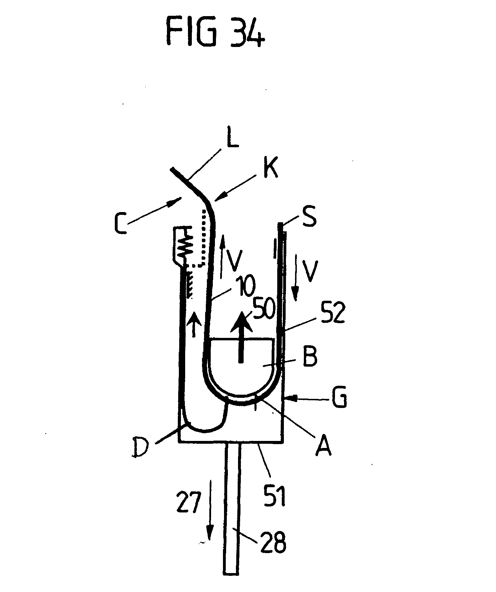

Gemäß Figur 34 ist die Blechlasche D bei einem Schlossumlenkelement 1 der in der Figur 25 gezeigten Art zusätzlich entlang der Bewegungsrichtung 50 des bewegbaren Bereiches B zwischen einer ersten und einer zweiten Position (linear) hin und her verschiebbar am Gehäuse G gelagert. Da dieser Freiheitsgrad der Blechlasche D dazu ausgelegt ist, einer am Anlagebereich A in der Bewegungsrichtung 50 (bzw. entgegen der Gurtverlaufsrichtung V des Schultersegmentes S) angreifenden Gurtkraft einen geringeren Widerstand entgegen zu setzen als die Deformation (Rollbiegung) des Deformationselementes D, erfolgt die lineare Verschiebung des Deformationselementes D in dessen zweite Position grundsätzlich vor einer Deformation des Deformationselementes D. Somit ist über die lineare Verschiebung des Deformationselementes D ein Arretieren des Sicherheitsgurtes 10 am Arretierbereich C möglich, bevor der Deformationsbereich der besagten Rollbiegung unterzogen wird. Die Festlegung des Sicherheitsgurtes 10 am Arretierbereich kann dabei direkt durch das Deformationselement D bewirkt werden, etwa indem dieses den Sicherheitsgurt 10 in seiner zweiten Position gegen den Arretierbereich C drückt. Zum Rückstellen des in seiner zweiten Position befindlichen Deformationselementes D, ist dieses bevorzugt über ein Federmittel mit dem Gehäuse G gekoppelt. Vorzugsweise ist das Deformationselement einstückig mit dem bewegbaren Bereich B verbunden (insbesondere angeformt), so dass der bewegbare Bereich B selbst den Sicherheitsgurt 10 gegen den Arretierbereich C drückt.

Bei den vorstehend beschriebenen Schlossumlenkelementen 1 kann das Gehäuse G den bewegbaren Bereich auch bis auf Schlitze für den Sicherheitsgurt 10 (Führungen) vollständig umschließen. In diesem Fall ist die offene Deckfläche des Gehäuses G verdeckt, d.h., als geschlossene Deckfläche bzw. Wandung ausgebildet.

## Patentansprüche

1. Sicherheitsgurtanordnung für ein Kraftfahrzeug, mit:
- einem entlang einer Gurtverlaufsrichtung (V) verlaufenden Sicherheitsgurt (10),
- einem Schultersegment (S) des Sicherheitsgurtes (10), zur Anlage an einen Oberkörper einer bestimmungsgemäß mittels des Sicherheitsgurtes (10) angegurteten Person,
- einem Schlossumlenkelement (1), das den Sicherheitsgurt (10) in das Schultersegment (S) und ein weiteres Gurtsegment (L) unterteilt, wobei das Schlossumlenkelement (1) den Sicherheitsgurt (10) entlang der Gurtverlaufsrichtung (V) so umlenkt, dass die beiden Segmente (S, L) in unterschiedlichen Raumrichtungen vom Schlossumlenkelement (1) abgehen,
- einem bewegbaren Bereich (B) des Schlossumlenkelementes (1), der unter der Wirkung Crash-bedingter Kräfte aus einer Anfangsstellung, in der der Sicherheitsgurt (10) am Schlossumrenkelement (1) entlang gleiten kann, in eine Endstellung bewegbar ist, in der der Sicherheitsgurt (10) am Schlossumlenkelement (1) fixiert ist, wobei der bewegbare Bereich (B) dazu eingerichtet und vorgesehen ist, den Sicherheitsgurt (10) bereits vor Erreichen der Endstellung am Schlossumlenkelement (1) zu fixieren, und
- wobei der Sicherheitsgurt (10) derart mit dem bewegbaren Bereich (B) zusammenwirkt, dass der bewegbare Bereich (B) durch eine am Schultersegment (S) angreifende Kraft, die das Schultersegment (S) entlang der Gurtverlaufsrichtung (V) spannt, aus seiner Anfangstellung in seine Endstellung bewegbar ist, und dass durch die Bewegung des bewegbaren Bereiches (B) in die Endstellung das Schultersegment (S) derart entlastet wird, dass die resultierende, an dem Schultersegment (S) angreifende Kraft begrenzt wird,
**dadurch gekennzeichnet, dass**
die Fixierung des Sicherheitsgurtes (10) am Schlossumlenkelement (1) durch den bewegbaren Bereich (B) selbst erfolgt.

2. Sicherheitsgurtanordnung nach Anspruch 1, **dadurch gekennzeichnet, dass** der bewegbare Bereich (B) dazu ausgebildet ist, in seiner Endstellung unter Zwischenlage des Sicherheitsgurtes (10) gegen das Schlossumlenkelement (1) zu drücken, um den Sicherheitsgurt (10) am Schlossumlenkelement (1) zu fixieren.

3. Sicherheitsgurtanordnung nach einem der vorhergehenden Ansprüche, **dadurch gekennzeichnet, dass** der bewegbare Bereich (B) zum Fixieren des Sicherheitsgurtes (10) am Schlossumlenkelement (1) eine Kraft auf den Sicherheitsgurt (10) entlang einer Richtung ausübt, die in die Endstellung des bewegbaren Bereichs (B) weist.

4. Sicherheitsgurtanordnung nach einem der Ansprüche 1 bis 3, **dadurch gekennzeichnet, dass** durch die Bewegung des bewegbaren Bereiches (B) in die Endstellung lediglich das Schultersegment (S) entlastet wird, um die in das Schultersegment (S) eingeleitete Kraft zu begrenzen.

5. Sicherheitsgurtanordnung nach einem der vorangegangenen Ansprüche, **dadurch gekennzeichnet, dass** der bewegbare Bereich (B) dazu ausgebildet ist, in der Anfangsstellung mit einem Anlagebereich (A) derart an dem Schultersegment (S) anzuliegen, dass die in das eine Schultersegment (S) eingeleitete Kraft zum Bewegen des bewegbaren Bereiches (B) auf diesen übertragbar ist, wobei insbesondere der bewegbare Bereich (B) dazu ausgebildet ist, den Anlagebereich (A) bei der Bewegung in die Endstellung zumindest teilweise entgegen der Gurtverlaufsrichtung (V) des Schultersegmentes (S) derart zu verlagern, dass das am Anlagebereich (A) anliegende Schultersegment (S) entlastet wird.

6. Sicherheitsgurtanordnung nach einem der vorhergehenden Ansprüche, **dadurch gekennzeichnet, dass** das Schlossumlenkelement (1) zumindest eine Durchgangsöffnung (O) zum Führen des Sicherheitsgurtes (10) und insbesondere zum Umlenken des Sicherheitsgurtes (10) aufweist, wobei der Sicherheitsgurt (10) die mindestens eine Durchgangsöffnung (O) in der Anfangsstellung des bewegbaren Bereiches (B) entlang der Gurtverlaufsrichtung (V) durchlaufen kann.

7. Sicherheitsgurtanordnung nach einem der vorangegangenen Ansprüche, **dadurch gekennzeichnet, dass** das Schlossumlenkelement (1) einen Arretierbereich (C) aufweist, wobei insbesondere der Sicherheitsgurt (10) in der Endstellung des bewegbaren Bereiches (B) am Arretierbereich (C) festgelegt ist.

8. Sicherheitsgurtanordnung nach Anspruch 6 und nach Anspruch 7, **dadurch gekennzeichnet, dass** der Arretierbereich (C) durch einen die Durchgangsöffnung (O) begrenzenden Randbereich des Schlossumlenkelementes (1) gebildet ist.

9. Sicherheitsgurtanordnung nach einem der Ansprüche 7 bis 8, **dadurch gekennzeichnet, dass** der bewegbare Bereich (B) dazu ausgebildet ist, den Sicherheitsgurt (10) beim Bewegen in die Endstellung am Arretierbereich (C) festzulegen.

10. Sicherheitsgurtanordnung nach einem der Ansprüche 7 bis 9, **dadurch gekennzeichnet, dass** der bewegbare Bereich und / oder der Arretierbereich (C) derart mit dem Sicherheitsgurt (10) zusammenwirken, dass der am Arretierbereich (C) festgelegte Sicherheitsgurt (10) eine Relativbewegung entgegen der Gurtverlaufsrichtung (V) vollführt, wenn eine entgegen der Gurtverlaufsrichtung (V) am Sicherheitsgurt (10) wirkende Kraft ein vorbestimmbares Kraftniveau übersteigt.

11. Sicherheitsgurtanordnung nach einem der Ansprüche 1 bis 10, **dadurch gekennzeichnet, dass** die Bewegung des bewegbaren Bereiches (B) aus der Anfangstellung in die Endstellung in einer Verformung des bewegbaren Bereiches (B) besteht.

12. Sicherheitsgurtanordnung nach einem der Ansprüche 1 bis 10 oder Anspruch 11, **dadurch gekennzeichnet, dass** der bewegbare Bereich (B) derart deformierbar ausgebildet ist, dass er durch eine an dem Schultersegment (S) angreifende Kraft, die das Schultersegment (S) entlang der Gurtverlaufsrichtung (V) spannt, reproduzierbar aus der Anfangstellung in die Endstellung verformbar ist, wobei insbesondere die Verformung in einer plastischen Deformation besteht.

13. Sicherheitsgurtanordnung nach einem der Ansprüche 1 bis 10, **dadurch gekennzeichnet, dass** der bewegbare Bereich (B) über zumindest ein Deformationselement (D) mit einem Teil des Schlossumlenkelementes (1) verbunden ist.

14. Sicherheitsgurtanordnung nach Anspruch 13, **dadurch gekennzeichnet, dass** das mindestens eine Deformationselement (D) dazu ausgebildet ist, sich unter Einwirkung einer vorbestimmbaren, an dem Schultersegment (S) angreifenden Kraft, die das Schultersegment (S) entlang der Gurtverlaufsrichtung (V) spannt, reproduzierbar zu Verformen, so dass der bewegbare Bereich (B) aus der Anfangstellung in die Endstellung bewegt wird.

15. Sicherheitsgurtanordnung nach Anspruch 5 und nach einem der Ansprüche 13 bis 14, **dadurch gekennzeichnet, dass** der Anlagebereich (A) zwischen einer ersten und einer zweiten Stellung hin und her bewegbar mit dem bewegbaren Bereich (B) gekoppelt ist derart, dass der Anlagebereich (A) unter Einwirkung einer an dem Schultersegment (S) angreifenden Kraft, die das Schultersegment (S) entlang der Gurtverlaufsrichtung (V) spannt, aus der ersten Stellung in die zweite Stellung bewegt wird, bevor der bewegbare Bereich (B) durch jene Kraft in seine Endstellung bewegt wird.

## Claims

1. A safety belt system for a motor vehicle, comprising:
- a safety belt (10) extending in a direction of extension of the belt (V),
- a shoulder portion (S) of the safety belt (10) for bearing against an upper body of a person strapped-in as intented by means of the safety belt (10),
- a buckle element (1) which subdivides the safety belt (10) into the shoulder portion (S) and a further belt portion (L), the buckle element (1) deflecting the safety belt (10) along the direction of extension of the belt (V) such that the two portions (S, L) extend away in different spatial directions from the buckle element (1),
- a mobile region (B) of the buckle element (1), which under the action of forces caused by a crash is mobile from an initial position in which the safety belt (10) may slide along the buckle element (1) into a final position, in which the safety belt (10) is fixed to the buckle element (1), the mobile region (B) being designed and provided to fix the safety belt (10) before reaching the final position on the buckle element (1), and
- the safety belt (10) cooperating with the mobile region (B), such that the mobile region (B) is movable by a force acting on the shoulder portion (S), which tensions the shoulder portion (S) in the direction of extension of the belt (V), from its initial position into its final position, and in that by the movement of the mobile region (B) into the final position the shoulder portion (S) is relieved such that the resulting force acting on the shoulder portion (S) is limited,
**characterized in that**
the fixing of the safety belt (10) on the buckle element (1) is carried out by the mobile region (B) itself.

2. The safety belt system as claimed in claim 1, **characterized in that** the mobile region (B) is configured to press against the buckle element (1) in its final position, interposing the safety belt (10), in order to fix the safety belt (10) to the buckle element (1).

3. The safety belt system as claimed in one of the preceding claims, **characterized in that** for fixing the safety belt (10) to the buckle element (1) the mobile region (B) exerts a force on the safety belt (10) in a direction which points towards the final position of the mobile region (B).

4. The safety belt system as claimed in one of claims 1 to 3, **characterized in that** by the movement of the mobile region (B) into the final position only the shoulder portion (S) is relieved, in order to limit the force introduced into the shoulder portion (S).

5. The safety belt system as claimed in one of the preceding claims, **characterized in that** the mobile region (B) is configured to bear in the initial position with a bearing region (A) against the shoulder portion (S) such that the force introduced into the one shoulder portion (S) for moving the mobile region (B) may be transmitted thereto, wherein in particular the mobile region (B) is configured to displace the bearing region (A) when moving into the final position at least partially counter to the direction of extension of the belt (V) of the shoulder portion (S) such that the shoulder portion (S) bearing against the bearing region (A) is relieved.

6. The safety belt system as claimed in one of the preceding claims, **characterized in that** the buckle element (1) has at least one through-opening (O) for guiding the safety belt (10) and in particular for deflecting the safety belt (10), the safety belt (10) being able to pass through the at least one through-opening (O) in the initial position of the mobile region (B) in the direction of extension of the belt (V).

7. The safety belt system as claimed in one of the preceding claims, **characterized in that** the buckle element (1) has a locking region (C), wherein in particular the safety belt (10) is secured in the final position of the mobile region (B) at the locking region (C).

8. The safety belt system as claimed in claim 6 and as claimed in claim 7, **characterized in that** the locking region (C) is formed by an edge region of the buckle element (1) defining the through-opening (O).

9. The safety belt system as claimed in one of claims 7 to 8, **characterized in that** the mobile region (B) is configured to secure the safety belt (10) when moving into the final position at the locking region (C).

10. The safety belt system as claimed in one of claims 7 to 9, **characterized in that** the mobile region and/or the locking region (C) cooperate with the safety belt (10), such that the safety belt (10) secured to the locking region (C) carries out a relative movement counter to the direction of extension of the belt (V), if a force acting on the safety belt (10) counter to the direction of extension of the belt (V) exceeds a predeterminable force level.

11. The safety belt system as claimed in one of claims 1 to 10, **characterized in that** the movement of the mobile region (B) from the initial position into the final position consists of a deformation of the mobile region (B).

12. The safety belt system as claimed in one of claims 1 to 10 or claim 11, **characterized in that** the mobile region (B) is configured to be deformable such that it may be deformed by a force acting on the shoulder portion (S) which tensions the shoulder portion (S) in the direction of extension of the belt (V), in a reproducible manner from the initial position into the final position, wherein in particular the deformation is a plastic deformation.

13. The safety belt system as claimed in one of claims 1 to 10, **characterized in that** the mobile region (B) is connected to a part of the buckle element (1) via at least one deformation element (D).

14. The safety belt system as claimed in claim 13, **characterized in that** the at least one deformation element (D) is configured to be deformed in a reproducible manner by the action of a predeterminable force acting on the shoulder portion (S) which tensions the shoulder portion (S) in the direction of extension of the belt (V), so that the mobile region (B) is moved from the initial position into the final position.

15. The safety belt system as claimed in claim 5 and as claimed in one of claims 13 to 14, **characterized in that** the bearing region (A) may be coupled to the mobile region (B), which is movable to and fro between a first and a second position, such that the bearing region (A), by the action of a force acting on the shoulder portion (S) which tensions the shoulder portion (S) in the direction of extension of the belt (V), is moved from the first position into the second position before the mobile region (B) is moved by said force into its final position.

## Revendications

1. Agencement de ceinture de sécurité pour un véhicule automobile, comprenant :
- une ceinture de sécurité (10) qui s'étend le long d'une direction d'un tracé de ceinture (V),
- un segment d'épaule (S) de la ceinture de sécurité (10) pour s'appliquer contre une partie supérieure du corps d'une personne attachée au moyen de la ceinture de sécurité (10) conformément aux prescriptions,
- un élément de renvoi de verrou (1), qui subdivise la ceinture de sécurité (10) dans le segment d'épaule (S) et dans un autre segment de ceinture (L), ledit élément de renvoi de verrou (1) renvoyant la ceinture de sécurité (10) le long de la direction de tracé de ceinture (V) de telle façon que les deux segments (S, L) partent dans des directions différentes dans l'espace depuis l'élément de renvoi de verrou (1),
- une zone mobile (B) de l'élément de renvoi de verrou (1) qui, sous l'action de force provoquée par une collision, est mobile depuis une position initiale dans laquelle la ceinture de sécurité (10) peut coulisser le long de l'élément de renvoi de verrou (1) jusque dans une position finale dans laquelle la ceinture de sécurité (10) est fixée sur l'élément de renvoi de verrou (1), ladite zone mobile (B) étant conçue et prévue pour fixer la ceinture de sécurité (10) déjà avant d'atteindre la position finale sur l'élément de renvoi de verrou (1), et
- la ceinture de sécurité (10) coopérant avec la zone mobile (B) de telle façon que la zone mobile (B) est déplaçable depuis sa position initiale jusque dans sa position finale sous l'effet d'une force, appliquée au segment d'épaule (S), qui tend le segment d'épaule (S) le long de la direction de tracé de ceinture (V), et que, du fait du déplacement de la zone mobile (B) jusque dans la position finale, le segment d'épaule (S) est déchargé de telle façon que la force résultante qui agit sur le segment d'épaule (S) est limitée,
**caractérisé en ce que**
la fixation de la ceinture de sécurité (10) sur l'élément de renvoi de verrou (1) a lieu au moyen de la zone mobile (B) elle-même.

2. Agencement de ceinture de sécurité selon la revendication 1, **caractérisé en ce que** la zone mobile (B) est réalisé de manière à presser contre l'élément de renvoi de verrou (1), dans sa position finale avec interposition de la ceinture de sécurité (10), afin de fixer la ceinture de sécurité (10) sur l'élément de renvoi de verrou (1).

3. Agencement de ceinture de sécurité selon l'une des revendications précédentes, **caractérisé en ce que** la zone mobile (B) destinée à fixer la ceinture de sécurité (10) sur l'élément de renvoi de verrou (1) exerce une force sur la ceinture de sécurité (10) le long d'une direction qui va vers la position finale de la zone mobile (B).

4. Agencement de ceinture de sécurité selon l'une des revendications 1 à 3, **caractérisé en ce que** du fait du déplacement de la zone mobile (B) jusque dans la position finale, seul le segment d'épaule (S) est déchargé afin de limiter la force appliquée dans le segment d'épaule (S).

5. Agencement de ceinture de sécurité selon l'une des revendications précédentes, **caractérisé en ce que** la zone mobile (B) est réalisé afin de s'appliquer, dans la position initiale, par une zone d'appui (A) contre le segment d'épaule (S) de telle manière que la force appliquée dans le segment d'épaule (S) est transmissible à la zone mobile (B) pour déplacer celle-ci, et en particulier la zone mobile (B) est réalisée afin de déplacer la zone d'appui (A) lors du déplacement jusque dans la position finale au moins partiellement à l'encontre de la direction de tracé de ceinture (V) du segment d'épaule (S) de telle façon que le segment d'épaule (S) appliqué contre la zone d'appui (A) est déchargé.

6. Agencement de ceinture de sécurité selon l'une des revendications précédentes, **caractérisé en ce que** l'élément de renvoi de verrou (1) comprend au moins une ouverture traversante (O) pour guider la ceinture de sécurité (10) et en particulier pour renvoyer la ceinture de sécurité (10), ladite ceinture de sécurité (10) pouvant traverser ladite au moins une ouverture traversante (O) dans la position initiale de la zone mobile (B) le long de la direction de tracé de ceinture (V).

7. Agencement de ceinture de sécurité selon l'une des revendications précédentes, **caractérisé en ce que** l'élément de renvoi de verrou (1) comprend une zone d'arrêt (C), et en particulier la ceinture de sécurité (10) est immobilisée contre la zone d'arrêt (C) dans la position finale de la zone mobile (B).

8. Agencement de ceinture de sécurité selon la revendication 6 et la revendication 7, **caractérisé en ce que** la zone d'arrêt (C) est formée par une région de bordure, de l'élément de renvoi de verrou (1), qui délimite l'ouverture traversante (O).

9. Agencement de ceinture de sécurité selon l'une des revendications 7 à 8, **caractérisé en ce que** la zone mobile (B) est réalisée de manière à immobiliser la ceinture de sécurité (10) dans la zone d'arrêt (C) lors du déplacement jusque dans la position finale.

10. Agencement de ceinture de sécurité selon l'une des revendications 7 à 9, **caractérisé en ce que** la zone mobile et/ou la zone d'arrêt (C) coopère avec la ceinture de sécurité (10) de telle manière que la ceinture de sécurité (10) immobilisée contre la zone d'arrêt (C) exécute un mouvement relatif à l'encontre de la direction de tracé de ceinture (V) quand une force agissant sur la ceinture de sécurité (10) à l'encontre de la direction de tracé de ceinture (V) dépasse un niveau de force prédéterminé.

11. Agencement de ceinture de sécurité selon l'une des revendications 1 à 10, **caractérisé en ce que** le déplacement de la zone mobile (B) depuis la position initiale jusque dans la position finale est une déformation de la zone mobile (B).

12. Agencement de ceinture de sécurité selon l'une des revendications 1 à 10 ou la revendication 11, **caractérisé en ce que** la zone mobile (B) est réalisée déformable de telle manière qu'elle est déformable depuis la position initiale jusque dans la position finale de manière reproductible sous l'effet d'une force, agissant sur le segment d'épaule (S), qui tend le segment d'épaule (S) le long de la direction de tracé de ceinture (V), et en particulier ladite déformation est une déformation plastique.

13. Agencement de ceinture de sécurité selon l'une des revendications 1 à 10, **caractérisé en ce que** la zone mobile (B) est reliée à une partie de l'élément de renvoi de verrou (1) via au moins un élément à déformation (D).

14. Agencement de ceinture de sécurité selon la revendication 13, **caractérisé en ce que** ledit au moins un élément à déformation (D) est réalisé afin de se déformer de façon reproductible sous l'action d'une force prédéterminée appliquée au segment d'épaule (S), qui tend le segment d'épaule (S) le long de la direction de tracé de ceinture (V), de sorte que la zone mobile (B) est déplacée depuis la position initiale jusque dans la position finale.

15. Agencement de ceinture de sécurité selon la revendication 5 et selon l'une des revendications 13 et 14, **caractérisé en ce que** la zone d'appui (A) est accouplée à la zone mobile (B) avec possibilité de déplacement en va-et-vient entre une première et une seconde position, de telle façon que la zone d'appui (A) est déplacée de la première position vers la seconde position sous l'action d'une force agissant sur le segment d'épaule (S), qui tend le segment d'épaule (S) le long de la direction de tracé de ceinture (V), avant que la zone mobile (B) soit déplacée par la force en question jusque dans sa position finale.
